# EUROPEAN PATENT SPECIFICATION

(11) **EP 3 316 989 B1**
(45) Date of publication and mention of the grant of the patent: **12.06.2019**
(21) Application number: 16734385.4
(22) Date of filing: 01.07.2016
(51) Int. Cl.: B01D 53/04, B01D 53/06, C01D 7/00

(54) **PROCESS FOR PRODUCING SODIUM CARBONATE/BICARBONATE**
VERFAHREN ZUR HERSTELLUNG VON NATRIUMCARBONAT/BICARBONAT
PROCÉDÉ DE PRODUCTION DE CARBONATE/BICARBONATE DE SODIUM

(30) Priority: 02.07.2015 EP 15306075; 27.10.2015 EP 15306712
(43) Date of publication of application: 09.05.2018
(73) Proprietor: SOLVAY SA, 1120 Bruxelles (BE)
(72) Inventor: VANDERVORST, Eric, 7850 Enghien (BE); SAVARY, David, Jean, Lucien, 69360 Sérézin-du-Rhône (FR); DUPONT, Gerard, 1030 Schaerbeek (BE); WALRAVENS, Hugo, 1860 Meise (BE); DUBOIS, Eric, Pierre, 4219 Wasseiges (BE); COQUEREL, Jean-Paul, 54950 Saint-Clément (FR); DAVOINE, Perrine, 1020 Brussels (BE); CAVALIER, Karine, 54110 Dombasle-sur-Meurthe (FR); HURTADO DOMINGEZ, Ines, 1040 Brussels (BE); ASENSIO, Salvador, 39300 Torrelavega (ES)
(74) Representative: Vande Gucht, Anne
(86) International application number: PCT/EP2016/065616
(87) International publication number: WO 2017/001690

(56) References cited:
- US-A- 4 971 611
- US-A1- 2002 004 157
- US-A1- 2004 011 198
- US-A1- 2005 183 572
- US-A1- 2007 253 872
- US-A1- 2014 199 228
- US-B1- 6 533 846

## Description

### Technical field

The invention relates to an improved process for producing sodium carbonate by an ammonia-soda process and/or for producing sodium bicarbonate, such as a process for producing refined sodium bicarbonate. The invention relates more particularly to a production process featuring reduced emission of carbon dioxide (CO₂), of an ammonia-soda process for producing sodium carbonate, or of a process for producing refined bicarbonate. This being achieved in using a specific Temperaure Swing Adsorption (TSA) CO₂ concentration module.

The present invention relates also to a large scale CO₂ gas separation unit for separation of CO₂ from a process gas, wherein the separation unit comprises a stator and a rotor which is connected to the stator and is rotatable relatively to the stator about a rotational axis, the rotor comprising a plurality of sectors, each sector containing a separation device arranged to separate at least part of the CO2 from the process gas which is led into the separation device, wherein each sector is fluidically connected with at least one valve.

In the present specification, an ammonia-soda process, also referred to as the Solvay process, means a process utilizing sodium chloride (NaCl), ammonia (NH₃) and carbon dioxide (CO₂) for the production of sodium bicarbonate (ammoniacal crude sodium bicarbonate) according to the following reactions:

NaCl + H₂O + NH₃ ↔ NaCl + NH₄OH (1)

NaCl + NH₄OH + CO₂ ↔ NaHCO₃(solid) + H₂O + NH₄Cl (2)

The sodium bicarbonate (ammoniacal crude sodium bicarbonate) may be subsequently calcined to give sodium carbonate (light soda ash) according to the following reaction:

2 NaHCO₃(solid) → Na₂CO₃(solid) + H₂O(gas) + CO₂(gaz) (3)

In a first variant of the ammonia-soda process, the ammonium chloride (NH₄Cl) is regenerated to gaseous ammonia by reaction with an alkali, generally lime or caustic soda, followed by distillation. For example, with lime, according to the following reaction:

2 NH₄Cl + Ca(OH)₂ → CaCl₂ + 2 NH₃ + 2 H₂O (5)

and the ammonia (gaseous) is recovered, generally by distillation.

The lime is generally produced by calcining limestone with coke, to produce quicklime, according to the following reaction:

CaCO₃ → CaO + CO₂(gas) (6)

and the quicklime is then hydrated in the form of milk of lime to produce calcium hydroxide (Ca(OH)₂).

In a second variant of the ammonia-soda process, called dual process or Hou process, when one prefers using the ammonium chloride in the form of a finished product, the ammonium chloride is crystallized in a fourth step (4) by addition of solid sodium chloride and by cooling; in this way, ammonium chloride is precipitated, and can be used, for example, as a fertilizer. This is accompanied by a net consumption of ammonia, according to the molar amount of ammonia extracted from the process which is not regenerated and not recycled.

The present invention may be applied to either of the two variants, the basic reactions in which are described above.

In one or the other variant, the production of "refined sodium bicarbonate" ("refined" in contrast to the ammoniacal crude sodium bicarbonate) is carried out in general from solid sodium carbonate dissolved in aqueous solution, and the solid sodium bicarbonate is recrystallized and purified according to the following reaction:

Na₂CO₃(solution) + H₂O(gas) + CO₂(gas) → 2 NaHCO₃(solid) (7)

Refined sodium bicarbonate may also be produced from sodium carbonate obtained by other processes, such as a sodium carbonate monohydrate process or a sodium sesquicarbonate process, these processes generally being supplied with trona or nahcolite minerals.

In present invention, "refined sodium bicarbonate" refers to a solid compound comprising generally at least 85% by weight of sodium bicarbonate, advantageously at least 90%, more advantageously at least 97%, even more advantageously at least 98%, or at least 99% by weight of sodium bicarbonate. In present invention, refined sodium bicarbonate comprises advantageously at most 600 ppm of sodium chloride, more advantageously at most 150 ppm sodium chloride. Said refined sodium bicarbonate comprises advantageously at most 600 ppm of sodium sulfate, more advantageously at most 150 ppm sodium sulfate. When the "refined sodium bicarbonate" is intended for food or pharmaceutical uses, it is advantageous that the refined sodium bicarbonate comprises at most 20 ppm ammonium, at most 10 ppm lead (Pb), and even more advantageously the "refined sodium bicarbonate" has no smell of ammonia according Sodium Bicarbonate US pharmacopeia USP27 test, and comprises at most 5 ppm lead, and even more advantageously comprises at most 2 ppm lead (Pb).

### Technical background

The Solvay process for producing sodium carbonate (also called soda ash) has undergone numerous developments and optimizations over 150 years, since its creation by Ernest Solvay. These developments have included in particular its energy optimization and the improved management of CO₂.

The ammonia-soda process for producing sodium carbonate, and/or for producing refined bicarbonate, requires energy: of the order of 9.7 to 13.6 GJ/t of soda ash (sodium carbonate) produced. The energy required is primarily in the form of thermal energy, which is supplied by a steam generator integrated in the process for producing carbonate or bicarbonate. The source of energy most frequently used by the steam generator is a carbon fuel of coal, fuel oil or natural gas type. The boiler of the steam generator produces a flue gas (combustion gas) which contains in general from 3% to 18% of CO₂ by volume on a dry gas basis (generally from 3% to 10% for natural gas boilers and from 8% to 18% for coal or fuel oil boilers).

An example of the process for producing sodium carbonate according to the ammonia process, and of the production of refined bicarbonate, is described in Ullmann's Encyclopedia of Industrial Chemistry ("Sodium carbonate" chapter, 2002 edition, Wiley-VCH Verlag GmbH & Co., 24 pages, at paragraphs 1.4.1 and 1.4.2).

The production of sodium carbonate and/or of sodium bicarbonate, like many industrial processes, emits carbon dioxide:
- by the emission of the steam generator flue gases,
- and by the emission of CO₂-depleted process gases, especially at the outlet of the lime kilns sector in transitory phase, for example during starting or stopping of a lime kiln (70 to 150 kg CO₂/t soda ash), or at the outlet of the CO₂-depleted soda plant column sector (40 to 100 kg CO₂/t soda ash),
- and, for the production of refined sodium bicarbonate, at the outlet of the refined bicarbonate column (50 to 300 kg CO₂/t sodium bicarbonate).

These emissions are for the most part a result of the physicochemical NaCl-NH₃-CO₂ balances of the soda plant columns or of the Na₂CO₃-NaHCO₃-CO₂ balances of the refined sodium bicarbonate columns (cf. Ullmann's Encycl., loc. cit. paragraph 1.4.1).

There are various known techniques for concentrating CO₂.

WO2011/112069 describes a process for capturing CO₂ from flue gases, using a PSA (Pressure Swing Adsorption) adsorption module based on hydrotalcite and zeolite, generating a gas enriched with CO₂ to more than 88% and up to 99.9% by volume on a dry gas basis; the enriched CO₂ is subsequently used in an ammoniacal brine (H₂O, NaCl, NH₄OH) for producing ammoniacal sodium bicarbonate, which is subsequently calcined to give sodium carbonate, and using caustic soda to regenerate ammonia. A disadvantage of this process is that caustic soda is most frequently produced by electrolysis of a sodium chloride (NaCl) brine, thereby co-generating gaseous chlorine (Cl₂), which must be utilized elsewhere.

US2014/0199228 describes a process for producing sodium carbonate by integration of a CO₂ capture module under flue gas pressure, with a process for producing sodium carbonate, in which the CO₂, concentrated to more than 80% and up to 99.95%, is used to produce ammoniacal sodium bicarbonate. A disadvantage of the process is the partial operation under pressure, during desorption of the enriched CO₂ between 8 and 25 bar, thereby giving rise to problems of corrosion and strength for the steels used in presence of ammonia. Another problem is the attrition of the adsorbent submitted to cycles of pressure/de-pressure exerting cyclical mechanical constraints, thus generating fines particles of absorbent released in CO₂ concentrated gas, such fines particles being then detrimental to the final sodium carbonate purity.

On the other hand, CO₂ concentration processes have the drawback of being highly energy consuming: for example, a coal boiler steam generator self-consumes up to 30% of the energy produced for the capture of its CO₂.

Over the 150 years of development and improvement of the Solvay process for producing sodium carbonate with ammonia, suppressing CO₂ emissions, or at least greatly reducing these emissions, has always stumbled on the energy cost of concentrating the low-concentration CO₂ resulting from the production processes, that is accompanied by an overall increase in fossil fuels (gas, coal, fuel oil) to be taken into account in the overall balance of CO₂ emitted or emissible from such manufacture.

It is also known in the art to use rotating units for separation of gas from a process gas, particularly for separation of carbon dioxide (CO₂). One method uses centrifugal forces in order to move a liquid in counter current flow to a process gas which is forced to the rotation center by gas pressure. In this way, a process gas component such as CO₂ which is to be separated can be absorbed in the liquid. Carbon dioxide, for example, can be absorbed from air in monoethanol amine, as is disclosed in US 2013/0319235 A1.

Using a rotor with sectors which are rotating with the rotor for gas separation is known from European patent application EP 1 145 755 A1. In the sectors, the separation process takes place, wherein the rotor rotates the sections to different stations where different steps of the process are carried out. The solution according to EP 1 145 755 A1 has the disadvantage that when changing from flowing the process gas through a sector to flowing a stripping gas through the sector, a rest of the process gas remains in the conduits to the separation devices in the sectors and dilutes the stripping gas such that the concentration of the separated gas in the stripping gas is deteriorated.

Another objective of this invention is to provide a large scale gas separation unit enabling a high concentration of the separated CO₂.

The solution of this objective is achieved by a rotary active valve for at least one gas rotor (10) of a sector. The valve comprises a rotor open area which is located at the rotor and a stator open area which is located at the stator. Between the rotor open area and the stator open area can overlap and can be laterally separated from each other by rotation of the rotor relative to the stator. In this way, the valve can at least partially be opened and closed. The extent of overlap of the rotor open area and the stator open area defines the extent of opening and closing of the valve, respectively. The extent of overlap corresponds to the extent of partial opening of the valve.

An open area means a possibility for a gas to penetrate through a valve region in which the open area is located. The valve region of the rotor also comprises rotor solid areas which cannot be penetrated by gas in a significant extent. Because the valve region comprises open areas without a physical presence, the valve region can be, at least partially, a theoretical plane or surface. The physical part or member to which the valve region belongs, preferably comprises a through a hole with the form of the open area.

An advantage of this solution is a significantly reduced dead zone in which process gas remains when another type of gas is led through a sector with the valve according to the invention, or when the flow direction is reversed. This is because the open areas of the valve can be arranged closer to the separation device as an external valve could be. In this way, an improved concentration of the separated gas can be achieved. For example, the concentration of CO2 in a process gas of 3% to 45% can be enhanced to 30% to 100% in the gas that is extracted from the gas separation unit.

US 2002/0004157, US 2004/0011198 and US 2007/0253872 disclose temperature swing adsorption processes using rotating beds to adsorb carbon dioxide.

### Brief description of the invention

The inventors have found, surprisingly, that the use of a temperature swing adsorption CO₂ concentration technique, using the specific device of present invention, limits the volume of dead zones inside the TSA device, limiting though the dilution of adsorbed CO₂ with recovering hot gases or recovering steam. This also reduces the needed energy for concentrating CO₂ from a low CO₂ content process gas (PG), to produce a CO₂-enriched gas of a given concentration.

In particular, the reduction of dead zone of the described device in the present description is enabled by avoiding the use of pipes and valves between different equipments, as in conventional TSA modules. All steps during a CO₂ capture cycle, said capture cycle comprising: a CO₂ capture step, a CO₂ desorption step (also called regeneration step), and a reconditioning step of the adsorbent, are performed in a single equipment.

A second advantage of the use of a CO₂ Temperature Swing Adsorption concentration module, contrary to a CO₂ Pressure Swing Adsorption concentration module which includes different pressure steps of several bars for CO₂ capture step, and CO₂ desorption step, does not induces such mechanical constraints as in PSA on the adsorbent, and so, reduces attrition of solid adsorbents, by avoiding such pressure swings cycles. This reduces fine solid particles generation of the adsorbent in the CO₂ enriched gas. Indeed such fine solid particles are detrimental to the quality of ammoniated crude sodium bicarbonate then transformed in sodium carbonate, or are detrimental to the refined sodium bicarbonate quality, in particular in insoluble content of the final products.

A third advantage of the present claimed invention, is that when limiting the increase in CO₂ concentration of low-content process gases obtained from production of sodium carbonate with an ammonia-soda process and/or from production of refined sodium bicarbonate, as for example with a limited increase in the CO₂ concentration of +10 to +90%, advantageously of +10 to +80% or of +10 to +70%, without seeking to have a highly concentrated CO₂ gas (to obtain a gas comprising, for example, less than 80% by volume, or less than 70% by volume, of CO₂, on a dry gas basis), in particular when using a Temperature Swing Adsorption (TSA) CO₂ concentration technique, and with recycling CO₂ enriched gases to the production of sodium carbonate in order to produce ammoniacal sodium bicarbonate, and/or to the production of sodium bicarbonate, to produce refined sodium bicarbonate, permitted a particularly advantageous synergy. The reason is that this approach makes it possible:
1. to limit the additional energy consumption, for enriching low CO₂ content process gases, especially by using the low-temperature heat energy of the ammonia-soda process, or by using the low temperature heat energy of "refined sodium bicarbonate" processes.
2. to increase the particle size of the ammoniacal crude sodium bicarbonate and/or of the refined sodium bicarbonate thus produced, when using CO₂ enriched gasses, in comparison with the production of crude or refined bicarbonate with low CO₂ content process gasses. The increase of particle size of the ammoniacal crude sodium bicarbonate induces a lowering of the humidity of the ammoniacal crude sodium bicarbonate or of the refined sodium bicarbonate at the exit from the filter section or from the centrifuge section, and thereby lowering the energy consumption for the drying/calcination of the product (to light soda ash) or to dry refined sodium bicarbonate, thereby releasing energy which can be used for the concentration of the CO₂ hitherto emitted to the stack, and allowing it to be recycled/used for the production of sodium carbonate or bicarbonate.

This limited enrichment allows a strong decrease in the overall CO₂ emitted by a soda plant of this kind and/or by a unit for producing refined sodium bicarbonate, and/or in the CO₂ emitted by the thermal station-power plant and/or the steam boiler supplying utilities to this soda plant.

This limited enrichment exhibits a large number of further advantages.

It makes it possible:
3. to decouple the production of sodium carbonate from an ammonia-soda process from the production of refined sodium bicarbonate which would be coupled with, and so to increase the ratio of sodium bicarbonate produced starting from sodium carbonate, by supplying more available CO₂ for the production of sodium bicarbonate than the limited excess generated by the combustible carbon from lime kilns and the CO₂ yields from ammonia soda-plant carbonation columns.
4. to increase the flexibility of the units for producing sodium carbonate by partially decoupling the lime kiln sections (producing CaO and CO₂): the CO₂ enriched gas recycled to be re-used does not require the corresponding calcination of limestone to quicklime.
5. to allow, alternatively, the use of fuel with a lower carbon content than the coke used normally in the soda-plant lime kilns (coke is composed primarily of carbon and inerts): examples of fuels with lower carbon content than coke may be: anthracite fuels or fuels comprising agricultural or forestry residues, which contain more hydrogen and other molecules. This lower carbon content, induces a drop in the CO₂ concentration of the 'weak gas' (or 'lean gas') of lime kiln in an ammonia-soda plant: generally from 40-43 vol% to 25-35% CO₂ in volume on dry basis (in other words, even weaker in CO₂). The use of a CO₂ TSA concentration module, using low temperature residual heat from ammonia-soda process or from refined sodium bicarbonate process, enables then to readjust the CO₂ concentration in CO₂ enriched gases to at least 40% vol, or event to at least 45% vol. % on dry basis.
6. to decouple, alternatively, the operation of the lime kilns for obtaining quicklime of optimized quality (allowing the production of more reactive quicklime, or of less viscous milk of lime to increase their concentration) without having to operate the kilns for the simultaneous production of a lime kiln weak gas with a high concentration of CO₂ (40 to 43 vol% on a dry gas basis).
7. to use, alternatively, horizontal lime kilns for the calcination of small limestone (particle size of less than 100, or even less than 50 or 15 mm), for which the CO₂ content of the calcination gases is again lower: 15 to 35%, or 15 to 30% by volume on a dry gas basis.
8. to use, alternatively, an excess of lime (CaO) produced relative to the CO₂, for other production processes.
9. to reduce the consumption of NaCl-type raw materials, by increasing the bicarbonate precipitation yield in an ammonia-soda process.
10. to reduce the costs of compressing CO₂/NH₃ with reduced volumes when the CO₂ is enriched.
11. to allow the use of a richer CO₂ (acidic carbon dioxide) for the treatment of the alkaline solid and liquid discharges from the soda plants and/or for production of refined sodium bicarbonate, by reducing the size of the neutralizing apparatus, in order to improve the environmental footprint of the soda plants.

Consequently, the invention relates to a process for producing sodium carbonate by an ammonia-soda process and/or for producing refined sodium bicarbonate in accordance with claim 1.

The present invention relates also to a large scale CO₂ gas separation unit for separation of CO₂ from a process gas, wherein the separation unit comprises a stator and a rotor which is connected to the stator and is rotatable relatively to the stator about a rotational axis, the rotor comprising a plurality of sectors, each sector containing a separation device arranged to separate the gas component such as CO2 from the process gas which is led into the separation device, wherein each sector is fluidically connected with at least one valve.

### Definitions

In the present specification, the term "a low CO₂ content process gas generated by a unit for producing sodium carbonate and/or sodium bicarbonate" denotes a process gas with low CO₂ content that is generated by: at least one of the equipments of the ammonia-soda process unit for producing carbonate. Examples of such equipments are: lime-kiln wherein limestone is calcined, bicarbonate column or bicarbonate crystallizer wherein non reacted CO₂ gas and inert gas have to be purged, including optionally, among the 'at least one of the equipments': steam production boiler of the unit producing sodium carbonate or sodium bicarbonate, that produces flue gas comprising CO₂ when the heat is produced by the combustion of a carbonaceous fuel.

In the present specification, the term "Temperature Swing Adsorption" process ("TSA process") relates to any process for a CO2 adsorption gas separation by temperature swing adsorption, employing cyclical variation of the temperature between a low temperature, called the adsorption temperature, and a high temperature, called the desorption (or regeneration) temperature.

In the present specification, the expression "recycled ... to produce ...", as in: "the CO₂-enriched gas is subsequently **recycled** to the ammonia-soda process unit or optionally to the refined sodium bicarbonate unit, in order **to produce** at least one product selected from the following: sodium carbonate, or ammoniacal sodium bicarbonate, or optionally refined sodium bicarbonate, or to carbonate at least a part of effluent from ammonia-soda process unit and/or generated by the refined sodium bicarbonate unit" : refers to the fact that the CO₂ is recycled for its at least partial absorption (i.e. consumption) in one of the products (sodium carbonate, sodium bicarbonate) or in one of the effluents listed.

In the present specification, the term "soda plant" refers to a unit for producing sodium carbonate by the ammonia-soda process.

In the present specification, ammoniacal crude sodium bicarbonate, also called crude bicarbonate, refers to a compound comprising by weight: at least 75% of sodium bicarbonate, at most 25% of sodium carbonate, and at least 0.2% of ammonia (expressed as total NH₄⁺ ion). Crude bicarb after precipitation column, and after separation of mother liquor, has a typical humidity from 8 to 20% water by weight expressed on humid product.

In the present specification, the choice of an element from a group of elements also explicitly describes:
- the choice of two or the choice of several elements from the group,
- the choice of an element from a subgroup of elements consisting of the group of elements from which one or more elements have been removed.

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

The term "comprising" includes "consisting essentially of' and also "consisting of'.

The use of "one" or "a(n)" in the singular also comprises the plural, and vice versa, unless otherwise indicated.

If the term "about" is used before a quantitative value, this corresponds to a variation of ± 10% of the nominal quantitative value, unless otherwise indicated.

### Brief description of the figures

Figure 1a is a schematic perspective view of a gas separation unit as a whole in a first embodiment,
Figure 1b is a schematic front view of a gas separation unit as a whole in a second embodiment,
Figure 2a is a schematic perspective view of the first embodiment of the gas separation unit in the first embodiment which is cut open,
Figure 2b is a schematic perspective view of the gas separation unit in the second embodiment which is obliquely cut open,
Figure 2c is a magnified part of figure 2b showing the valve at the bottom side of the rotor
Figure 3 is a schematic perspective view of a sealing and a disc shaped stator valve region of the first embodiment,
Figure 4a is a schematic top view of the gas separation unit in a second embodiment with the rotor in a first relative position to the stator,
Figure 4b is a schematic top view of the gas separation unit in the second embodiment with the rotor in a second relative position to the stator,
Figure 4c is a schematic top view of the gas separation unit in the second embodiment with the rotor in a third relative position to the stator,
Figure 4d is a schematic top view of the gas separation unit in the second embodiment with the rotor in a fourth relative position to the stator, and
Figure 5 is a schematic cross-section through a first embodiment of the gas separation unit.
Figure 6 a schematic perspective view through a second embodiment of the rotor.
Figure 7 a schematic perspective view through a second embodiment of the outside of the stator disc.
Figure 8 a schematic top view through a second embodiment of the stator open area.
Figure 9 is a block diagram of various particular embodiments of the invention, using a CO₂ enrichment module, which are referred to in Example 1.

### Detailed description of the invention

The present invention relates to a number of embodiments of the process, which are detailed below.
Item 1. Process for producing sodium carbonate by an ammonia-soda process and/or for producing refined sodium bicarbonate, wherein:
- a low CO₂ content process gas (PG) generated by an ammonia-soda process unit and/or generated by a refined sodium bicarbonate unit,
- is enriched into a CO₂ enriched gas by using a TSA (Temperature Swing Adsorption) CO₂ concentration module (1),
   and said CO₂-enriched gas has a CO₂ content increased by: at least +10% by volume on dry gas basis relative to the CO₂ concentration of the low content process gas, and
- the CO₂-enriched gas is subsequently recycled to the ammonia-soda process unit or optionally to the refined sodium bicarbonate unit, in order:
   - to produce at least one product selected from the following: sodium carbonate, or ammoniacal sodium bicarbonate, or optionally refined sodium bicarbonate,
   - or to carbonate at least part of effluent from the ammonia-soda process unit and/or generated by the refined sodium bicarbonate unit,
and wherein the TSA CO₂ concentration module is a gas separation unit (1) for separation of CO₂ from the process gas (PG), wherein:
- the gas separation unit (1) comprises a stator (20) and
- a rotor (10) which is connected to the stator (20) and is rotatable relatively to the stator (20) about a rotational axis (A),
- the rotor (10) comprising a plurality of sectors (16),
- each sector (16) containing a separation device (SD) arranged to separate at least part of the CO₂ from the process gas (PG) which is led into the separation device (SD),
- wherein each sector (16) is fluidically connected with at least one valve (40),
- the valve (40) is a rotary active valve (40), the rotary active valve (40) comprising a stator open area (23) which is located in a stator valve region (28) of the stator (20),
- the rotor (10) comprises a rotor valve region (18) having a
- rotor solid area (13) which is overlappable with the stator open area (23) in order to close the valve (40), and a rotor open area (14) which is overlappable with the stator open area (23) in order to open the valve (40),
- wherein an extent of overlapping of the stator open area (23), the rotor solid area (13) and the rotor open area (14) is changeable by a rotation (R) of the rotor (10) relative to the stator (20), and
wherein at least part of the CO₂ separated in the separation device (SD) is led out the separation device (SD) by heating so that to produce the CO₂ enriched gas.
Item 2. Process according to item 1, wherein the CO₂-enriched gas has an increased CO₂ concentration of at most +90%, advantageously at most +80%, more advantageously of at most +70%, even more advantageously of at most +60%, or more advantageously of at most +55%, or more advantageously of at most +50% by volume on a dry gas basis, relative to the CO₂ concentration of the low content process gas (PG).
Item 3. Process according to item 1 or 2, wherein the CO₂-enriched gas has a CO₂ concentration of at most 95% by volume on a dry gas basis.
Item 4. Process according to item 3, wherein the CO₂-enriched gas has a CO₂ concentration of at most 90% by volume on a dry gas basis.
Item 5. Process according to item 4, wherein the CO₂-enriched gas has a CO₂ concentration of at most 80% by volume on a dry gas basis.
Item 6. Process according to item 5, wherein the CO₂-enriched gas has a CO₂ concentration of at most 70% by volume on a dry gas basis.
Item 7. Process according to item 6, wherein the CO₂-enriched gas has a CO₂ concentration of at most 60% by volume on a dry gas basis.
Item 8. Process according to item 7, wherein the CO₂-enriched gas has a CO₂ concentration of at most 50%, by volume on a dry gas basis.
Item 9. Process according to item 8, wherein the CO₂-enriched gas has a CO₂ concentration of at most 45%, of CO₂, expressed by volume on a dry gas basis.
Item 10. Process according to any one of items 1 to 9, wherein the CO₂-enriched gas has a CO₂ concentration of at least +15% by volume on a dry gas basis, relative to the CO₂ concentration of the low CO₂ content process gas.
Item 11. Process according to item 10, wherein the CO₂-enriched gas has a CO₂ concentration of at least +20% by volume on a dry gas basis, relative to the CO₂ concentration of the low CO₂ content process gas.
Item 12. Process according to item 11, wherein the CO₂-enriched gas has a CO₂ concentration of at least +25% by volume on a dry gas basis, relative to the CO₂ concentration of the low CO₂ content process gas.
Item 13. Process according to item12, wherein the CO₂-enriched gas has a CO₂ concentration of at least + 30% by volume on a dry gas basis, relative to the CO₂ concentration of the low CO₂ content process gas.
Item 14. Process according to any one of items 1 to 13, wherein the low CO₂ content process gas is a gas selected from the source gases indicated in Table 1 below (columns 1 and 2 of the table), and the CO₂-enriched gas is an enriched gas according to Table 1 (columns 3 to 5 of the table) and used for the purpose stated in the same columns.

**Table 1: preferred particular embodiments as per the present invention for enrichment of low CO₂ content process gases according to their source (row) and according to the use of the enriched gas (column). The intersection of the rows and columns expresses the enrichment of the low CO₂ content process gas, to give a gas enriched with CO₂ and depleted in components other than CO₂ (inerts, nitrogen, oxygen etc..). CO₂ concentration is expressed on volume % on a dry gas basis.**

| Low CO₂ content process gas | | CO₂ Enriched gas & use | | |
|---|---|---|---|---|
| SOURCES | | GP-GBIR | GR | BIR CR |
| | % CO₂ (vol. dry) | 40-45% | 70-75% | 90-100% |
| GN, LCL-BIB | 5-16% | +24 to+40 | +54 to +70 | +74 to +95 |
| CL-BIR, FCH horiz. | 15-30% | +15-30 | +45-60 | +65-85 |
| FCH vertical | 30-45% | +10-15 | +25-45 | +45-70 |

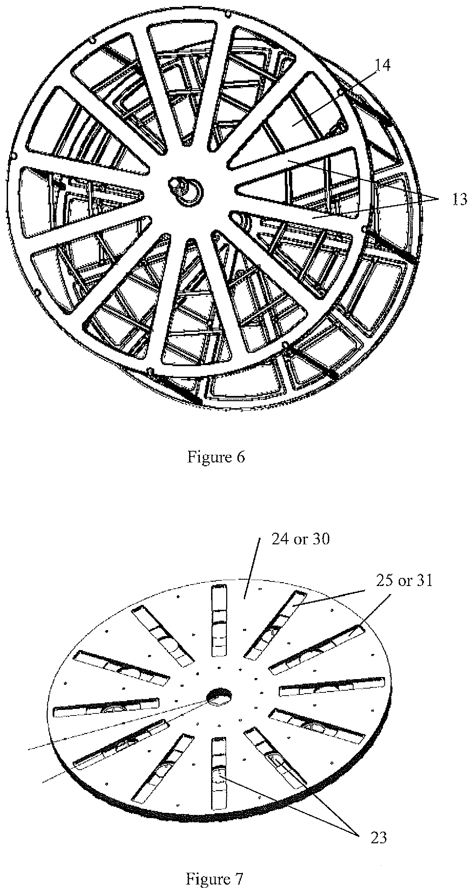

Key to abbreviations:
- GN (low CO₂ content process gas): flue gas from steam generator of ammonia-soda process unit producing sodium carbonate or from the unit producing refined bicarbonate.
- LCL-BIB (low CO₂ content process gas): exit gas from scrubber (LCL) of precipitation column of crude sodium bicarbonate (BIB or crude bicarb).
- CL-BIR (low CO₂ content process gas): exit gas from refined sodium bicarbonate (BIR) precipitation crystallizer or column.
- FCH horiz. (Low CO₂ content process gas): exit gas from horizontal lime kiln (FCH) such as rotary lime kilns.
- FCH vertical (low CO₂ content process gas): exit gas from vertical lime kilns (FCH).
- GP-GBIR (CO₂ enriched gas): "low CO₂ content" gas (as opposed to the "high CO₂ content" gas below), generally consisting of scrubbed FCH gas, used in the intermediate part of the crude bicarbonate precipitation columns (cf. Ullmann's Encycl. Fig.7) or BIR gas (for the production of refined sodium bicarbonate).
- GR (CO₂ enriched gas): "high CO₂ content" gas (also named rich gas or strong gas), comprising generally ammoniacal crude sodium bicarbonate dryer gas, and used at the lower part of the crude sodium bicarbonate precipitation columns (cf. Ullmann's Encycl. Fig.7).
- BIR CR (CO₂ enriched gas): gas used for the crystallization of refined sodium bicarbonate (BIR) in a crystallizer (CR) or in a column.

Item 15. Process according to any one of the preceding items, wherein the TSA CO₂ concentration module use energy for the CO₂ concentration of the low CO₂ content process gas, and at least part of the energy is steam at a pressure of less than 10, advantageously less than 5, more advantageously less than 3 bars relative to atmospheric pressure, generated by an apparatus in the ammonia-soda process unit for producing sodium carbonate and/or in the unit for producing refined sodium bicarbonate.
Item 16. Process according to item 15, wherein the steam at a pressure of less than 10 bars relative is a high-pressure steam expanded after having transferred part of its heat energy to at least one apparatus in the ammonia-soda process unit for producing sodium carbonate and/or in the unit for producing refined sodium bicarbonate, such as: a light soda ash dryer, a dense soda ash dryer, an ammonia distiller, an electricity-generating steam turbine, steam recovery compressor.
Item 17. Process according to item 15 or 16, wherein the steam with a pressure of less than 10 bar relative is a vapor or steam originating from the mechanical recompression of a steam or via an ejector of a steam or of a vapor from at least one apparatus in the ammonia-soda process unit for producing sodium carbonate and/or in the unit for producing refined sodium bicarbonate, such as: the vapor from a quicklime hydrator or slaker, the vapor from a dissolver of quicklime to milk of lime, the vapor from a sodium carbonate monohydrate evaporator-crystallizer, the vapor from a light soda ash dryer, the vapor from a dense soda ash dryer, the vapor of any hot effluent.
Item 18. Process according to any one of the preceding items, wherein the CO₂ concentration module uses energy for the CO₂ concentration of the low CO₂ content process gas, and at least part of the energy is a liquid effluent or a condensate having a temperature of at least 35°C and at most 110°C, generated by at least one apparatus in the ammonia-soda process unit for producing sodium carbonate or in the unit for producing refined sodium bicarbonate.
Item 19. Process according to any one of items 14 to 18, wherein the low CO₂ content process gas is a carbon-fuel steam generator flue gas, advantageously having a CO₂ concentration between 5 and 16 vol. % on a dry gas basis, and wherein the carbon fuel is selected from the following: coal, natural gas, lignite, hydrocarbon, fuel oil, biomass, carbon-containing household waste, carbon-containing agricultural waste, water treatment station residue, carbon-containing industrial residue, and mixtures thereof. The steam generator flue gas is advantageously in that case dedusted beforehand, and at least partly purified to remove NOx, and/or SOx, and/or HX.
Item 20. Process according to any one of items 14 to 18, wherein the low CO₂ content process gas is from an ammoniacal crude sodium bicarbonate precipitation column, or from a scrubber of such a column, and advantageously has a CO₂ concentration of between 5 and 16 vol% on a dry gas basis.
Item 21. Process according to any one of items 14 to 18, wherein the low CO₂ content process gas is from a refined sodium bicarbonate precipitation column or from a horizontal lime kiln, and advantageously has a CO₂ concentration of between 15 and 30 vol% on a dry gas basis.
Item 22. Process according to any one of items 14 to 18, wherein the low CO₂ content process gas is from a lime kiln, advantageously a vertical kiln, advantageously a parallel flow regenerative lime shaft kilns, more advantageously a vertical mixed feed shaft kiln, and preferably has a CO₂ concentration of between 30 and 45 vol% on a dry gas basis.
Item 23. Process according to items 21 or 22, wherein the low CO₂ content process gas is from a lime kiln in a tuning phase or in transitory regime, producing a low CO₂ content process gas with a CO₂ concentration of at least -5 vol% on a dry gas basis, relative to its nominal operation.
Item 24. Process according to any one of items 21 to 23, wherein the low CO₂ content process gas is from a lime kiln operating with a carbon fuel other than coke, such as: an anthracite, or a carbon fuel from industrial or household residues, or from biomass.
Item 25. Process according to any one of items 22 to 24, wherein the low CO₂ content process gas is from a lime kiln, and the lime kiln is selected from: a vertical shaft kiln, a vertical straight kiln: mixed-feed vertical kiln, a vertical kiln with fuel feed through the wall, an alternating-cycle vertical kiln, an annular vertical kiln.
Item 26. Process according to any one of the preceding items, wherein the concentration of the CO₂-enriched gas is least 30%, advantageously at least 35%, more advantageously at least 40% by volume on a dry gas basis.
Item 27. Process according to item 20 or item 21, or item 26, wherein the CO₂-enriched gas is recycled into an ammoniacal bicarbonate precipitation column, or refined sodium bicarbonate precipitation column, and is used for the production of: ammoniacal crude sodium bicarbonate, light soda ash, dense soda ash, or refined sodium bicarbonate, or for the treatment of effluents.
Item 28. Process according to the preceding item, wherein the CO₂-enriched gas is recycled into an ammoniacal bicarbonate precipitation column.
Item 29. Process according to any one of items 22 to 26, wherein the CO₂-enriched gas has a concentration of at least 50%, advantageously at least 60%, more advantageously at least 70%, and preferably at most 100% by volume on a dry gas basis,
and the CO₂-enriched gas is at least partly recycled into an ammoniacal bicarbonate precipitation column, preferably at the lower part of the ammoniacal bicarbonate precipitation column, or is recycled at least partly into a refined sodium bicarbonate precipitation crystallizer or column, and is used in the production of: ammoniacal crude sodium bicarbonate, light soda ash, dense soda ash, or refined sodium bicarbonate.
Item 30. Process according to any one of the preceding items, wherein the low CO₂ content process gas is generated by an ammonia-soda process unit for producing sodium carbonate, and at least part of the filter liquid after separation of the ammoniacal crude sodium bicarbonate is treated in an electrodialysis cell in which all or part of the NH₄Cl is regenerated to NH₃, such as, in particular, according to the process described in patent application EP 14188350.4.
Item 31. Process for producing bicarbonate according to item 30, wherein the low CO₂ content process gas is the exit gas from the refined sodium bicarbonate precipitation crystallizer or column, and the gas enriched in CO₂ by the TSA CO₂ concentration module comprises at least 40%, advantageously at least 60%, more advantageously at least 70% or even at least 80% of CO₂ by volume on a dry gas basis.
Item 32. Process for producing bicarbonate according to item 31, wherein the gas enriched in CO₂ is at least partly recycled to the refined sodium bicarbonate precipitation crystallizor or column, so as to achieve an overall precipitation yield of CO₂ in the precipitated refined sodium bicarbonate of at least 70%, advantageously of at least 80%, more advantageously of at least 90%.
Item 33. Gas separation unit (1) for separation of CO₂ from a process gas (PG), wherein:
the gas separation unit (1) comprises a stator (20) and
a rotor (10) which is connected to the stator (20) and is rotatable relatively to the stator (20) about a rotational axis (A),
the rotor (10) comprising a plurality of sectors (16),
each sector (16) containing a separation device (SD) arranged to separate at least part of the CO₂ from the process gas (PG) which is led into the separation device (SD),
wherein each sector (16) is fluidically connected with at least one valve (40),
the valve (40) is a rotary active valve (40), the rotary active valve (40) comprising a stator open area (23) which is located in a stator valve region (28) of the stator (20),
wherein the rotor (10) comprises a rotor valve region (18) having a
   rotor solid area (13) which is overlappable with the stator open area (23) in order to close the valve (40), and a rotor open area (14) which is overlappable with the stator open area (23) in order to open the valve (40),
wherein an extent of overlapping of the stator open area (23), the rotor solid area (13) and the rotor open area (14) is changeable by a rotation (R) of the rotor (10) relative to the stator (20).

Item 34. Gas separation unit (1) according to item 33, characterized in that the rotor solid area (13) is formed by an axial end surface of a sector boundary wall (15).
Item 35. Gas separation unit (1) according to item 34, characterized in that the space between the end parts of the sector boundary wall (15) act as the rotor open area (14) at which gas can flow from or to the sector (16).
Item 36. Gas separation unit (1) according to any one of items 33 to 35, characterized in that the rotor solid area (13) is combined with a flat plate or disc formed stator valve region (28).
Item 37. Gas separation unit (1) according to any one of items 33 to 36, characterized in that the stator (20) comprises two stator discs (24) which are arranged at each axial end of the rotor (10).
Item 38. Gas separation unit (1) according to item 37, characterized in that diffusors (25) are arranged in radial direction and on the outside of the stator discs (24).
Item 39. Gas separation unit (1) according to item 38, wherein the diffusors (25) have a rectangular shape.
Item 40. Gas separation unit (1) according to Item 38 or 39, characterized in that the width of the rotor solid area (13) is greater than the width of the diffusors (25), in rotational direction such that the valves (40) can be closed completely.
Item 41. Gas separation unit (1) according to any one of items 33 to 40, characterized in that a sealing (30) is arranged between the valve region of the rotor (18) and the valve region of the stator (28).
Item 42. Gas separation unit (1) according to item 41, characterized in that the sealing (30) has sealing openings (31) and the stator open areas (23) are stator open areas (23c) which have a smaller cross section than the associated sealing openings (31c), so that the sealing openings (31c) can act as diffusors (25).
Item 43. Gas separation unit (1) according to Item 41, characterized in that the sealing (30) comprises sealing openings (31) and is fixed to one of the stator (20) and the rotor (10), wherein the pattern of the sealing openings matches with the pattern of the stator open areas (23) when the sealing is fixed to the stator (20), or the pattern of the sealing openings matches with the pattern of the rotor open areas (14) when the sealing is fixed to the rotor (10), wherein the sealing is preferably fixed to the stator (20).
Item 44. Gas separation unit (1) according to Item 43, characterized in that the sealing (30) comprises two sealing components, whereof one is arranged at the rotor (10) and the other one is arranged at the stator (20).
Item 45. Gas separation unit (1) according to Item 44, characterized in that one of the sealing components is made of a softer material than the other one.
Item 46. Gas separation unit (1) according to Item 45, characterized in that the sealing component made of the softer material is PTFE reinforced fiber glass while the sealing component made of the other material is stainless steel hardened by ionic nitriding.
Item 47. Gas separation unit (1) according to any one of Items 37 to 39, characterized in that sealings (30) are arranged between the rotor (10) and the stator discs (24), wherein the sealings comprise sealing openings (31) arranged in radial direction and are fixed to the stator discs (24) and wherein the patterns of the sealing openings (31) match with the patterns of the diffusors (25) comprised in the stator discs (24).
Item 48. Gas separation unit (1) according to any one of Item 37 to 39, characterized in that sealings (30) are arranged between the rotor (10) and the stator discs (24), wherein the sealings comprise sealing openings (31) arranged in radial direction and are fixed to the stator discs (24) and wherein the sealing openings (31) constitute the set of diffusors (25).
Item 49. Gas separation unit (1) according to any one of Items 33 to 48, characterized in that it is free of any conduit connecting the valve (40) to the sector (16) useful as gas inlet or outlet towards and from the separation device (SD), respectively.
Item 50. Gas separation unit (1) according to any one of Items 33 to 49, characterized each sector (16) is such that its dead zone, if any, does not exceed 5 vol. %, of the total volume of the sector (16).
Item 51. Gas separation unit (1) according to any one of Items 33 to 50, characterized in that each sector (16) is such that its dead zone, if any, does not exceed 5 vol. % of the total volume of the gas separation device (SD), and preferably each sector (16) is essentially free or is even completely free of dead zone.
Item 52. Gas separation unit (1) according to anyone of items 33 to 51, characterised in that
- the rotor valve region (18) and the stator valve region (28) are flat,
- wherein the stator valve region (28) and the rotor valve region (18) are preferably arranged substantially perpendicular to the rotational axis (A).

Item 53. Gas separation unit (1) according to one of the items 33 52 but 46, characterised in that the rotor valve region (18) is located in an outer periphery of the rotor (10), wherein the rotor valve region (18) has a convex shape and a constant radius in regard of the rotational axis (A), and a stator open area (23) is located in a stator valve region (28) in a surface of the stator (20), wherein the stator valve region (28) has complementary shape to the shape of the rotor valve (18) region and the same constant radius in regard of the rotational axis (A).
Item 54. Gas separation unit (1) according to any one of the Items 33 to 53, characterized in that the rotor open area (14) and the stator open area (23) both have a size which is small in comparison to a cross-section perpendicular to the rotational axis, and the rotor solid area (13) is an outer surface of the rotor (10).
Items 55. Gas separation unit (1) according to any one of Items33 to 54, characterized in that the rotor open area (14) is arranged at or close to an inlet of a separation device (SD).
Item 56. Gas separation unit (1) according to any one of Items 33 to 55, characterized in that there is a plurality of gas separation devices (SD) in a sector (16) and in that a gas distributor for gas distribution from the rotor open area (14) to a plurality of inlets of gas separation devices (SD) in the sector (16) is arranged close to a rotor open area (14) of the sector (16).
Item 57. Gas separation unit (1) according to any one of Items 33 to 56, characterized in that one of the rotor open area (14) and the stator open area (23) has a smaller extent in rotational direction (R) than the other open area (23, 14), wherein preferably the stator open area (23) has the smaller extent in rotational direction (R).
Item 58. Gas separation unit (1) according to any one of the Items 33 to 57, characterized in that between two open areas (14, 23) of one of a rotor valve region (18) and a stator valve region (28), a non-overlapping zone that is free of open areas (14, 23) is provided, the non-overlapping zone having an extent in rotational direction (R) that is greater than the greatest rotational extent of an open area (14, 23) of the valve region (18, 28).
Item 59. Gas separation unit (1) according to any one of the Items 33 to 58, characterized in that each sector (16) comprises two valves (40), each one at or close to one axial end of the rotor (10).
Item 60. Gas separation unit (1) according to any one of the Items 33 to 59, characterized in that at least one sector (16) and preferably each sector (16) has a heating and/or cooling system that is independent from the CO₂ stream that is led through the sector (16).
Item 61. Gas separation unit (1) according to Item 60, characterized in that each sector (16) has a heating and cooling system that is independent from the CO₂ stream and the process gas throughput that are led through the sector (16).
Item 62. Gas separation unit (1) according to any one of Items 33 to 61, characterized in that the gas separation unit (1) is arranged for continuously rotating the rotor (10) relatively to the support (20).
Item 63. Gas separation unit (1) according to any one of Items 33 to 62, characterized in that the stator (20) comprises stations (26) for a supplying a sector (16) of the rotor (10) with a fluid via at least one valve comprising a stator open area (23), wherein one or more stations (26) are arranged for carrying out one process of gas separation or one part of such a process.
Item 64. Method for separation of CO₂ from a process gas (PG) stream, characterized in that the gas separation unit (1) according to any one of Items 33 to 63 is used.
Item 65. Use of the gas separation unit (1) in accordance with any one of Items 33 to 63 for separating the CO₂ from the process gas (PG) stream, characterized in that the gas separation unit (1) is used for separation of CO₂ from the process gas (PG) stream and that the CO₂ is used for a sodium bicarbonate production process.
Item 50. Process according to one of the items 1 to 32, characterized in that the TSA CO₂ concentration module is a gas separation unit (1) according to any one of the items 33 to 47.

Regarding the gas separation unit (1), a further advantage is a progressive opening and closing of the valves that is possible, which avoids quick pressure changes. Preferably, the gas separation unit is operated at a pressure that is lower or higher than the pressure of the surrounding atmosphere, for example at about 800 hPa to about 2500 hPa abs in a normal atmosphere of about 1000 hPa abs. It is preferred that the valve is adapted to seal the gas in the gas separation unit against the surrounding atmosphere. Process temperatures can, for instance, range from 20°C to 150°C in a CO₂ separation process. The valve and particularly its sealings can be arranged to withstand these temperatures.

The open areas of the active rotary valve preferably act together with open areas of other active rotary valves of the gas separation unit, for example valves belonging to different sectors. Therefore, an active rotary valve is considered as according to the invention even if its open areas act together only during a small period of operation time only or if two valve open areas are not clearly assignable to one specific valve but to a set of valves only.

The separation device of a sector can use sorption, preferably adsorption and/or a temperature swing in order to separate a gas, particularly carbon dioxide, from the process gas. To this end, the process gas with the CO₂ which is to be separated can be led into or through the separation device in a first step, wherein the CO₂ is bound and/or separated, and in a second step, the separated gas can be released from or and/or led out of the separation device. For the first and the second step, the same path through the sector can be taken by the process gas and by the separated CO₂, wherein the flow direction can, in view of the first step, be reversed in the second step. In the at least two processing steps, the sectors can fluidically be connected to different gas streams.

The rotational axis is to be considered as theoretical axis which can, but needs not to have a physical correspondent. The sectors can have at least approximately the shape of a segment of a circle, but need not necessarily to have such a shape. Preferably, the rotor open area of the valve is arranged at an outer surface of the rotor. Also, preferably no significant use of centrifugal forces is made. The separation unit is preferably used in large-scale applications which means that gas is separated in an amount that is much greater than the amount of a typical laboratory scale where gas separation may be used for analytical or experimental purposes. Laboratory separation yield is typically in the range of 0.0001 k tons per year. For example, the yield of a large scale application can be about 20 k tons to 150 k tons of carbon dioxide per year which is extracted from the gas separation unit in an exit stream. This is an advantageous size for using the gas separation unit for carbon dioxide separation in order to supply a typical bicarbonate production process. Gas separation units preferably have a yield of about at least 0.5 k tons of CO₂ per year. From this size on and in larger sizes, they operate economically in typical embodiments and under standard economic conditions. Advantageously, larger gas separation units significantly enhance the economy of the gas separation unit. Gas separation units having a yield of 500 k tons of CO₂ per year are possible and operate with improved economy.

In an embodiment, a rotor open area is located in a flat valve region of the rotor or of a member of the rotor, and a stator open area is located in a flat valve region of the stator or a of a member of the stator. Preferably, the valve regions are both arranged perpendicular to the rotational axis. Then, no tilt compensation is required when the rotor is rotating.

The flat valve regions of the rotor and the stator can touch each other in a tight way such that a good tightness can be achieved even if there is a relative movement between the two flat valve regions. Furthermore, flat valve regions are comparably easy to manufacture. Flat means that the surface is not significantly bent.

It is possible to locate one or each of the open areas in separable members of the rotor and the stator, respectively. The rotor open area and/or the stator open area can be arranged in an axial plane of a plate, disc or ring of the rotor and the stator, respectively. The plate, disc or ring can additionally comprise further geometries deviating from a plate, the disc or a ring form and/or it can be separable or attached to the rotor and the stator, respectively, for example by screwing or welding. A rotor plate, disc or ring can be attached at an axial end of the rotor. Preferably, if a plurality of open areas and valves are present, at least two windows in the rotor plate, disc or ring are arranged at the same radius in regard of the rotational axis. Corresponding open areas in the stator plate, disc or ring are preferably arranged at the same radius in regard of the rotational axis. The pattern of the rotor open areas is preferably similar or identical to the pattern of the stator open areas, preferably in a tangential direction in regard of the rotational axis. Then, a regular opening and closing of valves is possible. Alternatively, the rotor solid areas can have the same pattern as the stator open areas, preferably in a tangential direction in regard of the rotational axis. Then also, a regular opening and closing of valves is possible.

The window plates, discs or rings are, for example, made of hardened steel, ceramics or another stiff, hard and/or wear resistant material. Preferably, they have a flatness which leads to a sufficient tightness. A contact surface for mechanical contact between the rotor and the stator can be coated with a material which improves tightness and/or wear and/or friction. This can be a material with a soft component and a hard component in order to have stability and flexibility at the same time. The hard component can, for example, comprise fibers. As the valve regions in the rotor and the stator move relative to each other in operation, the coating can also contain a friction reduction material and/or agent, which also can ameliorate wear.

The plates, discs or rings can hold the sectors such that they can also have the function of a mechanical connection element. This is also true for rings of the embodiment which is described next.

In a further embodiment, a rotor open area is located in a valve region on the outer periphery of the rotor or of a peripheral member of the rotor, wherein the valve region has a convex shape having a constant radius in regard of the rotational axis. A stator open area has complementary shape and is located in a valve region on a surface of the stator or of a member of the stator. In a mounted state, the valve region of the stator is directed to the valve region of the rotor and has the same constant radius in regard of the rotational axis as the valve region of the rotor. Preferably, the valve regions are arranged at a cylindrical outer surface of the rotor and the stator, respectively. A valve region member or section of the rotor and/or the stator can be ring shaped, wherein the valve regions are arranged in the peripheral surface of the ring. The ring preferably has a greater axial dimension than its radial thickness. An outer surface of such a ring can, in case of the stator valve region, also be a concave surface. The ring can be separable and/or attached to the rotor and the stator, respectively, for example by welding or screwing. The rotor open area and the stator open area are, in their mounted positions, preferably arranged at the same axial position in regard of the rotational axis. If there is a plurality of open areas and valves present, the rotor open areas and the stator open areas can have a similar pattern in the rotor and the stator, preferably in a tangential direction in regard of the rotational axis.

In order to match radii of the rotor valve region and the stator valve region and to compensate for shape irregularities and deviations from a cylindrical form, elastic components of the stator and the rotor or of a separable sealing can be involved. As mentioned with more details in regard of the previously described embodiment, on at least one of the rotor and the stator valve regions a coating can be arranged which can ameliorate tightness and/or wear. Also, a ring as mentioned above can have a dedicated elasticity for form and/or diameter compensation.

In a further embodiment, a rotor solid area is a surface located at or close to a boundary wall of a sector. An open inner part of the sector acts as the rotor open area, for instance, the open in a part of the sector can be a volume that is fluidically connected to the inlet to one or more gas separation devices. Preferably, the rotor solid area is formed by a surface of a wall which separates two neighbored sectors.

Preferably, the rotor solid area is formed by an axial end surface of a sector boundary wall, also commonly referred to by the skilled person as sector division wall or sector dividing wall or separator wall. Such are rotor solid area is preferably combined with a flat plate or disc formed stator valve region.

In an alternative preferred example, the rotor solid area is formed by radial surface of a sector boundary wall. Such a rotor solid area is preferably combined with a ring shaped stator valve region that extends in direction of the rotational axis and that has, perpendicularly thereto, a constant radius with regard of the rotational axis.

Preferably, the width of the surface of a sector boundary wall is greater than the width of the stator open area, in rotational direction, preferably less than half the width of sector boundary wall greater. Then, the time period, during which the valve is closed, is short and mainly only during the transit of a sector boundary wall in front of the stator open area. Therefore, gas transfer through the valve and to the gas separation device is possible during a significant portion of the operation time of the unit, in many cases.

Preferably, the boundary wall surface has a substantially straight form. For example, the boundary wall is arranged in radial direction in regard of the rotational axis.

In a further embodiment, the rotor open area and the stator open area both have the form of a window. The rotor solid area has the form of an outer surface of the rotor, and is arranged between two windows. A window shall be understood as an open area with a size which is small in comparison to a cross-section perpendicular to the rotational axis.

In a further embodiment, a sealing is arranged between the valve regions of the rotor and the stator. The sealing is attached to one of the stator and the rotor. It is also possible to attach a sealing component to each of the stator and rotor such that the relative movement takes place between the sealings. The sealing has open areas which have the same pattern of open areas as the component to which the sealing is attached. Thus, the sealing openings matches with the pattern of the stator open areas (23) when the sealing is fixed to the stator (20), or the pattern of the sealing openings matches with the pattern of the rotor open areas (14) when the sealing is fixed to the rotor (10), wherein the sealing is preferably fixed to the stator (20). In this way, it is rendered possible that gas can flow through the open areas of the rotor and the stator when they are overlapping. The form of the sealing can match with the form of the open areas which can be window areas, i.e., the sealing can for instance have plate shape, disc shape, flat ring shape or ring shape with comparably significant axial extension.

Preferably, the sealing is elastic in order to compensate irregularities of or form deviations between the surfaces in which the open areas are located. The rotor valve region and the stator valve region can in operation be pressed against the sealing in order to improve tightness.

The sealing is preferably fixed to the stator, and there is no sealing at the rotor. This has the effect that the dead zone which contributes to dilution of the gas to be separated is reduced as the location of valve action is arranged at the outer surface of the rotor. Therefore, the volume of the sealing window is not a part of the dead zone, but it would be if the sealing was attached to the rotor. This advantageous effect can also be achieved, if the sealing comprises two components, one of which is arranged on the stator and a counterpart is arranged on the rotor, as the sealing on the rotor can be thinner as it would be if there was a sealing on the rotor only.

In a preferred embodiment with two sealing components, wherein one of the sealing components is to be arranged on the rotor and other one on the stator, respectively, one of the components is softer than the other one which is called a hard component in the following.

Typically, the softer component has a hardness which is lower than the hardness of the hard component; the hardness can be notably Shore D or Rockwell C hardness.

The hard component has preferably a Rockwell C hardness (HRC), as defined by ASTM E18, of at least 45, more preferably of at least 50, even more preferably of at least 55. Besides, the hard component has preferably a HRC of at most 70, more preferably of at most 67 and even more preferably of at most 65.

Preferably, the softer component has a Shore D hardness, as defined by ASTM D2240, of at least 40, more preferably of at least 50, even more preferably of at least 60.

In some embodiments, it is preferred to arrange the softer component at the rotor: this is because generally the rotor valve region comprises more open areas than the stator valve region, such that the covered area is smaller as on the stator.

Nevertheless, it is much more often preferred to arrange the soft sealing component on the stator; indeed, the soft component is more probable to wear and thus to be replaced first, and, when arranged at the stator, access thereto is easier. The use of a hard and soft sealing component has the advantage that the soft component adapts to the form of the hard component such that form precision of the valve regions can be lower. Moreover, the use of a hard and soft sealing improves the operational life time of the surfaces in contact. Indeed, the soft component is able to absorb small particles that may be present during the operation, thus limiting friction and wear while maintaining a proper sealing.

The sealing hard component is preferably smooth to avoid abrasive effects and fast wear out of the soft sealing component. The sealing hard component can be polished. Preferably, surface roughness Ra of the hard component is 1µm or less. The surface roughness of the soft component can be expected to adapt to the surface roughness of the hard component by wear. It is preferred, that edges from a valve region to open areas in it have a radius such that the sealing can cross these edges without significant wear. Because the soft component is softer, its surface profile is expected to be flattened by a sealing pre-load, i.e., the force by which the rotor and the stator are pressed against each other. The surface roughness of the soft component can thus be greater than the surface roughness of the hard component. The pre-load is preferably adapted to provide low friction, low wear and a good sealing effect.

In a further embodiment, suitable soft materials can be polymers which are preferably fiber enforced. For example, polyetheretherketone (PEEK) or polytetrafluorethylene (PTFE) can be used. These materials can be fiber reinforced, particularly by glass fibers or carbon fibers. Alternatively, PEEK or PTFE can be added to a conventional fiber glass or carbon fiber reinforced material which might comprise epoxy or polyester resin, respectively. PEEK of PTFE or both can be added as particles or layers, for instance. The basic material, including fibers or not, can additionally contain graphite, MoS2 and/or WS2, as a friction reduction agent. Also, a self-lubricating sealing can be used, for example a sealing of solid graphite or a sealing with a graphite layer at its friction surface. Preferably, on the stator, a dedicated sealing counterpart is attached. This can for example be a coating or a layer which comprises chromium oxide ceramic, tungsten carbide or silicon carbide which are very hard materials. Alternatively, the stator can form a sealing counterpart by its basic material in the valve region, for example a hardened steel. Hardening can for example be performed by nitriding, particularly plasma nitriding, or carburizing. The steel is preferably stainless steel. All combinations of the above-mentioned materials for the sealing components provide preferable tribological systems which are suited to withstand chemical attacks, for example by acids, and thermal shocks, for example of about 100°C. This results in which provides low friction and are long lifetime, for example of more than 1 year of continuous operation, preferably of about 4 years.

A preferred combination is PTFE reinforced fiber glass with stainless steel hardened by ionic nitriding. Alternatively, PTFE reinforced fiber glass can be combined with chromium oxide and ceramic which can be deposited as a coating. As another alternative, PTFE reinforced fiber glass which is also comprises MoS2 can be combined with and tungsten carbide coating, preferably on stainless steel.

In a further embodiment, the rotor open area is arranged close to or at an inlet into the gas separation device in a sector of the rotor. In this way, the dead zone is reduced as any intermediate volume between the rotor window and the inlet of the gas separation device to contribute to dead zone volume in which gas separation is not present or is minimised. If there is a plurality of the single effective gas separation devices in a sector, it is preferred that their inlets are arranged close to or at the rotor open area. Alternatively, a gas distributor with a small gas containing volume can be arranged between the rotor open area and the inlets of the gas separation device switch which also shall be considered as a close arrangement of the rotor open area and the inlets to the gas separation devices.

In a further embodiment, a gas distributor is arranged close to a rotor open area of a sector. Then, the gas separation device(s) can themselves be arranged close to the rotor open area which avoids unnecessary dead zone volume. Preferably, the gas distributor is arranged in a plate, disc or ring in which the rotor open area of the sector is arranged. The gas distributor can have the form of a diffusor which has an increasing cross-section with its distance to the valve region. In many cases, at a greater cross-section, more inlets of gas separation devices can be arranged.

In a further embodiment, one of the rotor open area and the stator open area has a smaller extent in rotational direction than the other open area. A relative movement of the rotor and the stator in rotational direction leads to an opening and closing characteristic in which with start of overlap of the rotor open area and the stator open area, a continuous increase of a gas stream occurs. After the smaller open area is fully overlapped by a part of the bigger open area, preferably a phase follows in which the smaller window is continuously fully overlapped by a part of the bigger window and during which the small open area moves through the cross-section of the bigger open area. Therefore, the throughput of gas is kept constant in this phase. After this phase, a closing phase follows. In the closing phase, the overlap between the two open areas is continuously reduced such that a continuous decrease of the gas flow occurs during the further relative movements of the rotor and the stator.

Preferably, the stator open area has the smaller extent in rotational direction, and preferably has a window shape as defined above. Then, the bigger rotor open area can serve as a part of a distributor or a diffusor for a plurality of gas separation devices in a sector. However, in an alternative example, it is preferred to have the smaller rotor open area, especially, if there is a dedicated low dead zone distributor or diffusor arranged at the rotor open area which has a smaller dead zone volume as a big rotor open area construction would have.

Sectors may have a dead zone or may be free of dead zone. Dead zones are typically zones where process gas can remain entrapped.

Advantageously, at least one sector is such that its dead zone, if any, does not exceed 10 vol. % of the total volume of the sector. Preferably it does not exceed 5 vol. %; more preferably it does not exceed 2 vol. %, even more preferably it does not exceed 1 vol. % of the total volume of the sector. The most preferably, at least one sector is essentially free or is even completely free of dead zone.

Preferably, each sector is such that its dead zone, if any, does not exceed 10 vol. % of the total volume of the considered sector; more preferably it does not exceed 5 vol. %; still more preferably it does not exceed 2 vol. %, the most preferably it does not exceed 1 vol. % of the total volume of the sector. The most preferably, each sector is essentially free or is even completely free of dead zone.

Besides, it has been found advantageous that at least one sector is such that its dead zone, if any, does not exceed 10 vol. % of the total volume of the gas separation device. Preferably it does not exceed 5 vol. %; more preferably it does not exceed 2 vol. %, even more preferably it does not exceed 1 vol. % of the total volume of the gas separation device.

Preferably, each sector is such that its dead zone, if any, does not exceed 10 vol. % of the total volume of the gas separation device; more preferably it does not exceed 5 vol. %; still more preferably it does not exceed 2 vol. %, the most preferably it does not exceed 1 vol. % of the total volume of the gas separation device.

In a further embodiment, between two open areas out of a rotor valve region or out of a stator valve region, a non-overlapping zone without open areas is arranged. The non-overlapping zone has an extent in rotational direction that is bigger than the greatest extent in rotational direction of an open area from the other valve region that comprises the open areas for overlapping with the open areas of the valve regions with the above-mentioned non-overlapping zone. In this way, it can be prevented that an open area acts as a bridge between two open areas of one valve region. Therefore, gas which is for example in different sectors or in different gas supplies of the stator cannot mix. One supply is connected to one sector only.

In a further embodiment, each sector comprises two valves, one at or close to each axial end of the rotor. In this way, gas can cross a gas separation device in an axial direction of the rotor. This is advantageous because no bending off the gas path is necessary to change or reverse the direction of the gas flow which is also advantageous for an efficient use of the volume of a sector. The arrangement of the open areas on the rotor and the stators as well as the form of the open areas can be identical for both axial ends of the rotor. A valve which is arranged at the periphery of the rotor and which is not arranged in the middle or near the middle of the rotor is also considered as being close to an axial end of the rotor.

Generally, a heating system and a cooling system are required for at least one sector. Thus, generally at least one of the heating fluid or cooling fluid flows through the sector using the same pathway as the process gas and the component gas. In a further embodiment, at least one sector and preferably each sector has a heating and cooling system that is independent from the process gas throughput through the sector. In another embodiment, at least one sector and preferably each sector has a heating and/or cooling system that is independent from the CO₂ stream that is led through the sector. In still another embodiment, at least one sector and preferably each sector has a heating and cooling system that is independent from the process gas throughput and from the CO₂ stream that are led through the sector (16). In still another embodiment, at least one sector and preferably each sector has a heating and/or cooling system that is independent from the process gas throughput and from the CO₂ stream that are led through the sector (16). As herein used, "independent" typically denotes that the heating or cooling fluid, as the case may be, flows through the sector via a circuit which is specifically used for heating or cooling purposes and which is separated from the process gas and/or the CO₂ stream throughput, as the case may be. This disposal has the advantage that neither the process gas, nor the CO₂ stream is susceptible of being contaminated by the heating fluid or by the cooling fluid or by both of them. Moreover, the use of the gas separation unit in such a configuration makes the choice of the fluids that are used for heating and cooling more flexible.

Accordingly, in some embodiments, valves which are dedicated for the heating system are provided in the same way that has been proposed for the process gas. In other embodiments, valves which are dedicated for the heating system and/or for the cooling system are provided in the same way that has been proposed for the process gas and the CO₂ stream. In still other embodiments, heating and cooling fluids flow through the sectors without mixing with the process gas and the separated gas. The open areas of valves for supplying heating and cooling gases to a sector can, for example, be arranged at a different radius in a flat axial window area in a window disc or/and at a different axial position in a peripheral window ring. The authors have found particularly advantageous to use open areas of valves for supplying at least one of the heating and cooling fluids that are arranged at a different radius in a flat axial window area in a window disc.

In a further embodiment, the gas separation unit is arranged for continuously rotating the rotor relatively to the support. The stator open areas and their supplies are stationary whereas the rotor is relatively moved to the stator such that a quasi-continuous operation of the gas separation unit can be achieved in this way. Only in the transitions of the open areas between different sectors, the flow of gas is discontinued.

In a further embodiment, each sector has the same angle portion of the rotor. The angle portion corresponds to 360° divided by the number of sectors.

Preferably, 2 to 100 sectors are arranged around the rotor. Very large numbers of sectors are particularly used for a very large size unit.

If there are more sectors than process steps, more than one sector can perform the same or a similar process step at the same time. It is preferred to have a number of sectors that corresponds to the number of process steps or a multiple thereof, wherein the multiple is calculated by multiplying with a whole-number. It is particularly preferred to have 8 to 24 sectors in the rotor. Further, the number of sectors usually corresponds to the number of stations of the stator. A station of the stator is defined below.

The sectors can have at least approximately the shape of circle segments which together form a cross-section of the rotor with an approximately circular outer periphery. Alternatively, the sectors can have other shapes that can be combined to make up a rotor, such as honeycombs or tubes with circular cross-section or blocks or slices or other shapes, for example. The single sectors can be attached to each other to form the rotor.

The stator can comprise a plurality of stationary stations each of which comprises one or more stator open areas which, in a certain rotational position of the rotor, make up a part of one or more valves for supplying one single sector. By the rotational speed and the number of sectors, the cycle time for processing at one station can be set.

It is possible that at one station, two valves with different functions can be open simultaneously. For example, a process gas can be supplied to a sector, and at the same time, a cooling process can take place, each process being enabled by opening of at least one dedicated valve.

One can further think of a subsequent station in which the same functions of valves are deployed in order to prolong the processing time of a certain process.

Also, a sequence of stations can be provided which are arranged for a bidirectional flow of process gas through a sector.

In a further aspect of the invention, a method of gas separation is proposed in which the gas separation unit as described above is used for gas separation.

A possible use of the gas separation unit is the separation of carbon dioxide from a process gas. The process gas can for example originate from a chemical process, for example a combustion or another chemical reaction producing carbon dioxide. Carbon dioxide from the gas separation unit can be used in a bicarbonate production process.

In the following, embodiments of the gas separation unit (1) of the invention are described, as examples only with regard to the attached figures.

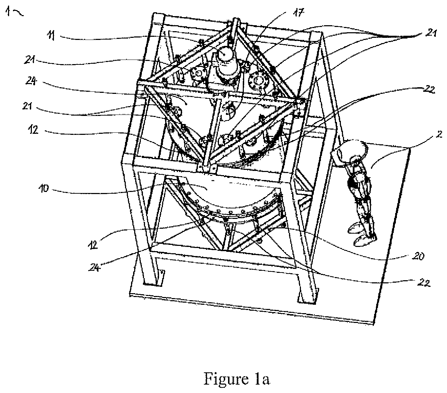

Figure 1a is a schematic perspective view from obliquely above to a gas separation unit 1 in a first embodiment according to the invention. For size comparison, a person 2 is displayed beside the gas separation unit 1. In comparison to this example, the size of the gas separation unit 1 can be much larger as well. The gas separation unit 1 comprises a rotor 10 and a stator 20. The rotor 10 is rotatable relatively to the stator 20 about a shaft 17 which can be achieved by a drive 11. In the center of the shaft 17, a theoretical rotational axis located which is not shown in Figure 1a. The stator 20 comprises two stator discs 24 which are arranged at each axial end of the rotor 10. The stator discs 24 are pressed against the axial ends of the rotor 10 by spring loaded pressing devices 22. In this way, the stator discs 24 are in pre-loaded touch with rotor discs 12 which are located at the axial ends of the rotor 10. The stator discs 24 each comprise several flanges 21 for supplying and discharging gas to and from the rotor 10, respectively. Each flange 21 is provided for supplying and discharging one sector, respectively, which is located inside the rotor 10 and which is not visible in Figure 1a.

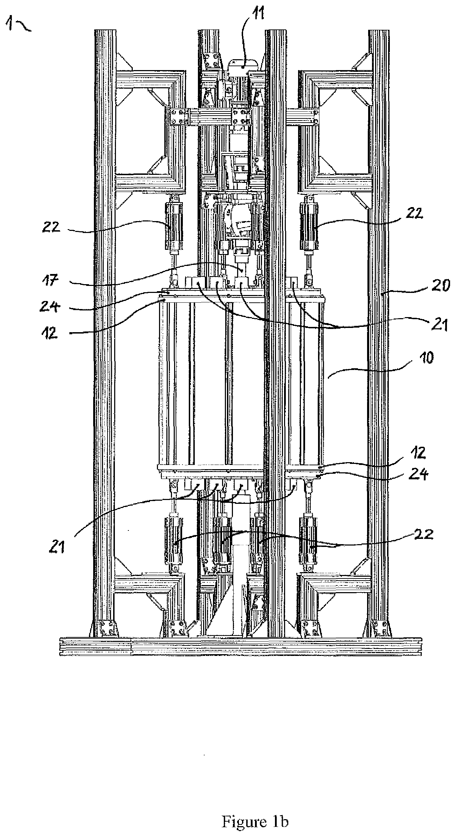

Figure 1b is a front view of a second embodiment. The second embodiment is constructed similar to the first embodiment. Same features and elements are associated with the same reference numerals as in Figure 1b and as in its description to which can be referred in this respect. Differences that are visible in Figure 1b mainly concern the construction of the stator 20 which still has the same functions and the same main configuration.

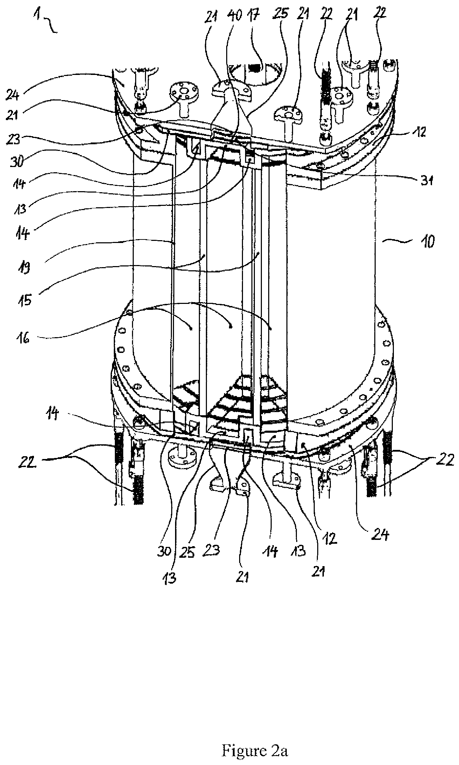

Figure 2a is a schematic perspective view of the first embodiment of the gas separation unit 1 which has been cut open partially for demonstration purposes. Same features and elements are associated with the same reference numerals as in Figures 1a and 1b and as in its description to which can be referred in this respect. Inside the rotor 10, sectors 17 are arranged which are bordered by an outer wall 19 of the rotor 10 and separated from each other by sector division walls 15. The sectors 16 approximately have a cross section of a circle segment with a cut tip. In these sectors 16, one or more gas separation devices are arranged which are not shown in Figure 2a. Each of the sectors 16 can be supplied by a valve 40 and can be discharged by a valve 40. One single valve 40 can be used for supply and for discharge of a sector 16 at different times of operation, at which flow direction is reversed, respectively.

In this embodiment, the gas separation unit 1 comprises one valve 40 at each axial end of the rotor 10, for each sector 16. To each valve 40, in every rotational position of the rotor 10, one rotor solid area 13, one rotor open area 14 and one stator open area 23 is assigned. Rotor solid areas 13 and rotor open areas 14 rotate with the rotor 10, such that different rotor solid areas 13 and rotor open areas 14 can be assigned to the stationary stator open area 23. The stator open areas 23 are arranged in the stator discs 24. Each stator open area 23 is associated with one flange 21. The connection between the stator open area 23 and the flange 21 can be a diffusor 25, particularly for stator open areas 23 which have an enhanced width in rotational direction. The valves 40 can be open, closed and partially open which is determined by the portions of overlap of the stator open areas 23 with the rotor solid areas 13 and the rotor open areas 14, respectively. The rotor solid areas of 13 and the rotor open areas 14 are neighboring. The bigger the portion of the rotor open area 14 is, the more the valve 40 is opened. When rotation of the rotor 10, starting from a completely closed valve, effects an increasing overlap of the stator open area 23 and the rotor open area 14, the valve 40 continuously opens more until complete overlap is achieved. The stator open areas 23 have a greater dimension in rotational direction than the rotor open areas 14 have. In this way, full overlap of the rotor open areas 14 with the stator open areas 23 can occur over a certain rotational angle. When this overlap lessens again, a greater part of the rotor solid area 13 overlaps the stator of an area 23. Thus, valve is continuously closed more with the rotation of the rotor 10. The rotor solid area 13 has a width in rotational direction which is greater than the width in rotational direction of the stator of open area 23 such that the valve 40 can be completely closed by a complete overlap of these areas 13 and 23. In the closed state of the valve 40, the stator open area 23 is, by further rotation of the rotor 10, assigned to another sector 16 which comprises another rotor solid area 13 and another rotor open area 14. To this end, the sector division walls 15 are located in transition areas between the rotor solid areas 13 and their neighboring rotor open areas 14 of a neighboring sector 16.

The surfaces of the rotor solid areas 13, in rotational direction of the rotor 10, together form a flat ring shaped rotor valve region 18 which also defined to comprise the rotor open areas 14 though they are not from solid material. A surface of the stator disc 24 which in operation is directed to the rotor 10 comprises a flat ring shaped stator valve region 28 into which the stator open areas 23 are included. Between the rotor valve region 18 and the stator valve region 28, a sealing 30 is arranged. The sealing 30 is fixedly attached to the stator valve region 28 and has sealing openings 31 which have the same pattern and shapes of stator open areas 23. Therefore, the surface of the sealing 30 which is directed to the rotor 10 and which collaborates with the rotor valve region 18 is an active valve plane 44 in which opening and closing of the valve takes place. The sealing 30 can be detachable or can be a coating of the stator valve region 28.

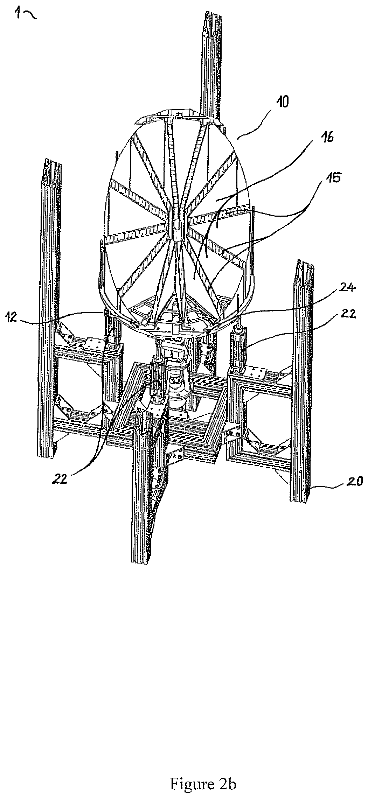

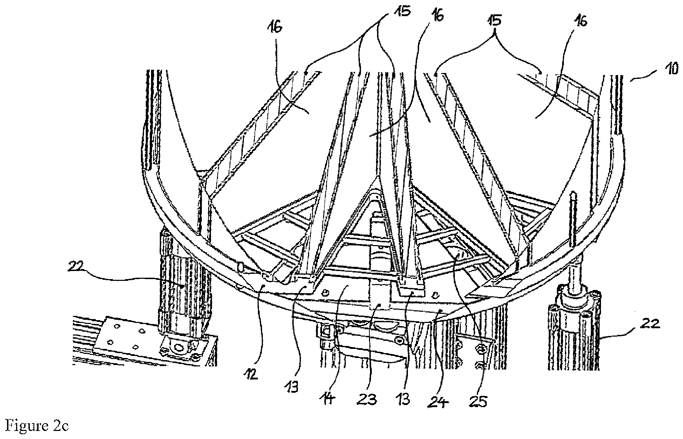

Figures 2b and 2c are a schematic perspective view of the second embodiment of the gas separation unit 1 which is also shown in Figure 1b and which has been cut open partially with an oblique cut for demonstration purposes. Figure 2c shows a magnified part of Figure 2b which comprises parts of a valve between the rotor 10 and the stator 10. Same features and elements are associated with the same reference numerals as in Figures 1a, 1b and 2a and as in its description to which can be referred in this respect. The second embodiment that is shown in Figures 2b and 2c differs from the first embodiment shown in Figure 2a in that the rotor solid areas 13 are end parts of the separator walls 15. Here, a sealing or a rotor component of a sealing can be located which is not shown in Figures 2b and 2c. The space between the end parts of the separator walls 15 act as the rotor open area 14 at which gas can flow from or to a sector 16. The rotor solid areas 13 can overlap with stator open areas 23 which are located in the stator disc 24. Then, the valve is closed. The stator open areas 23 have a smaller width in rotational direction in comparison to their length and extend in radial direction in regard to a rotational axis of the rotor 10. The stator open areas 23 have substantially the same angular distance to their neighbors as the angular distance between the sector division walls 15. Therefore, transition of the rotor solid areas 13 from one sector of 16 to a neighboring sector 16 occurs simultaneously over all stator open areas 23. As the rotor solid areas 13 are wider in rotational direction as the width in rotational direction of the stator open area 23, in transition, no gas is transferred from one sector 16 to a neighboring sector 16. After a transition, the ends of the sector division walls 15 touch the surface of the stator disc 24 and seals one sector 16 from its neighbor sector 16. Then, the valve is open and gas can flow from the stator open areas 23 to the respective sectors 16. The stator open areas 23 are connected to diffusors 25, which are visible partially and from the inside only in Figure 2c. From each diffusor, gas can flow from or to a sector 16 of gas separation unit 1. The rotor solid area 13, the rotor open area of 14 and the stator disk 24 with its stator open areas 23 form the valve at the lower axial end of the rotor 10. A second valve with the same construction and functions can be arranged at the upper end of the rotor 10.

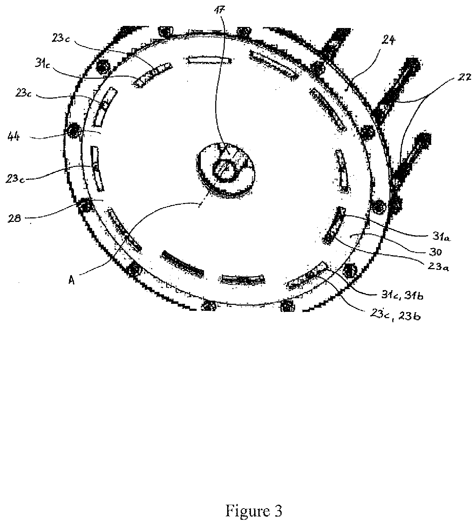

Figure 3 shows a schematic perspective view on the sealing 30 and the stator disc 24. The view is on the active valve plane 44 of the valves on top of the sealing 30 and on one side of the stator disc 24. The rotor is not shown in Figure 3. Same features and elements are associated with the same reference numerals as in Figures 1a and 2a, 2b, 2c and their descriptions which can be referred to in this respect.

Figure 3 shows stator open areas 23a and 23b which are located on different radii in regard of the rotational axis A which is located in the center of the shaft 17. In this way, for the different stator open areas 23a and 23b, different rotor solid areas and rotor open areas can be provided on respective radii. It is also possible, to omit the rotor solid areas on one radius such that stator open areas 23a or 23b on this radius can act as a continuous gas inlet or outlet towards and from the sectors, respectively. This can be advantageous for heating or cooling the sectors which can take place continuously. It is possible to lead gas from stator open areas 23a and 23b on different radii to different parts of the sectors. Then, gas that is delivered to a sector from different radii by stator open areas 23a and 23b does not mix in the sector. In this way, the process gas and separated gas can be led separated from heating or cooling gas.

Some of the stator open areas 23c have a smaller cross section than the associated sealing openings 31c. In this way, the sealing openings 31c can act as a diffusor. This solution is very cost-effective.

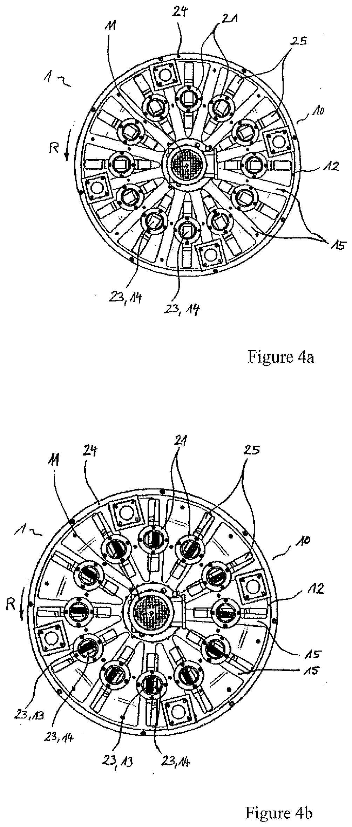

In Figure 4a, a schematic top view of a second embodiment of the gas separation unit 1 is shown. The second embodiment is identical to the first embodiment in many respects such that only the differences will be described in the following. Same features and elements are associated with the same reference numerals as in Figure 1a, 1b, 2a, 2b, 2c and 3 and their descriptions which can be referred to in this respect.

The main difference between the first and the second embodiment is that in the second embodiment, the axial end surfaces of the sector dividing walls 15 are used as the rotor solid areas 13 which can close the stator open areas 23. The sector dividing walls 15 are displayed schematically by a star like element extending from the middle of the rotor. The sector dividing walls 15 are drafted with solid lines, although they in reality are located behind the stator disc 24. Another difference between the first and the second embodiment is that for supplying each stator open area 23, diffusors 25 are arranged in radial direction and on the outside of the stator disc 24. The stator open areas 23 have the same rectangular shape and therefore also mainly extend in a radial direction of the rotor 10. Each of the diffusors 25 is connected to one flange 21. The width of the sector dividing walls 15 in rotational direction is greater than the width of the diffusors 25 such that the valves can be closed completely. The areas of the sector dividing walls 15 which do not overlap with the stator open areas 23 run over a sealing between the stator and the rotor, which is not shown in Figure 4a. In Figure 4a, the valves are shown in a fully opened state in which the sector dividing walls 15 do not overlap with the diffusors 25 and the stator open areas 23, respectively.

In Figure 4b, a schematic top view of a second embodiment of the gas separation unit 1 is shown. Figure 4b is almost identical to Figure 4a. In the following, only the differences to Figure 4a are discussed. Same features and elements are associated with the same reference numerals as in Figure 1a, 1b, 2a, 2b, 2c, 3 and 4a and their descriptions which can be referred to in this respect.

In contrast to Figure 4a, the valves are shown partially closed in Figure 4b. The stator open areas 23, the rotor open areas 14 and the rotor solid areas 13, partially overlap. The rotor solid areas 13 are shown in black. The rotor 10 and with it the sector dividing walls 15 are turning counter-clockwise as is shown by the arrow R. Therefore, the valves continue to close from the state that is shown in Figure 4b.

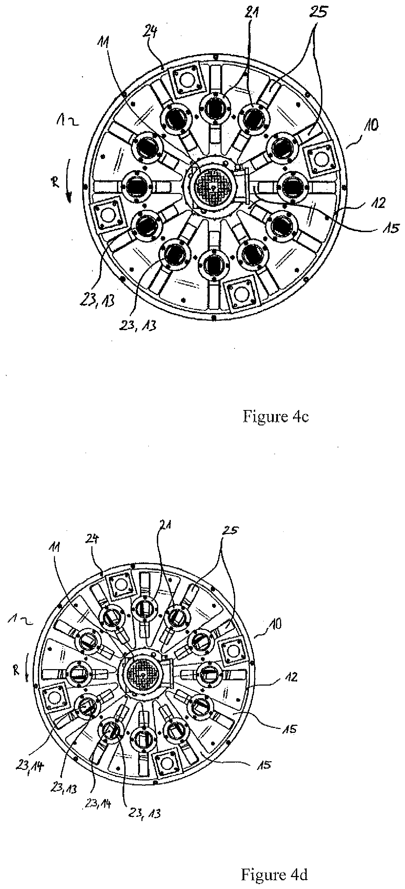

In Figure 4c, a schematic top view of a second embodiment of the gas separation unit 1 is shown. Figure 4c is almost identical to Figure 4a and 4b. In the following, only the differences to Figure 4b are discussed. Same features and elements are associated with the same reference numerals as in Figure 1a, 1b, 2a, 2b, 2c, 3, 4a and 4b and its descriptions which can be referred to in this respect.

In Figure 4c, the valves are shown in a completely close state. The sector dividing walls 15 are aligned with the diffusors 24 such that full cross-sections of the stator open areas 23 are overlapped by the sector dividing walls 15. The axial end surfaces of the sector dividing walls 15 which form rotor solid areas 13 are shown in black inside the stator open areas 23. From the closed state of the valves as shown in Figure 4, the valves start opening again as the rotor 10 rotates further in direction R.

In Figure 4d, a schematic top view of a second embodiment of the gas separation unit 1 is shown. Figure 4d is almost identical to Figure 4a, 4b and 4c. In the following, only the differences to Figure 4c are discussed. Same features and elements are associated with the same reference numerals as in Figure 1a, 1b, 2a, 2b, 2c, 3, 4a, 4b and 4c and its description which can be referred to in this respect.

Figure 4d shows the valves in a partially opened state similar to the state that is shown in Figure 4b but with the difference that in Figure 4d, the valves are still in the opening process. Only a small part of the cross-section of the stator open areas 23 is overlapped by the sector dividing walls 15. The gas separation unit 1 undergoes the following cycles:
1. valve fully open,
2. valve partially open and about to close,
3. valve completely closed, and
4. valve partially open and about to open.

In the second embodiment, the period of time in which the valves are fully open is the longest one amongst the cycles. One advantage is that this longest period of time contributes to an enhancement of the efficiency of the device. The period of time in which the valve is completely closed is the shortest of the cycles. Generally, the period of time in which the valves are completely closed does not exceed 30 % of the period of time required for a complete cycle. Preferably it does not exceed 20 %, more preferably it does not exceed 15 %, even more preferably it does not exceed 10 %.

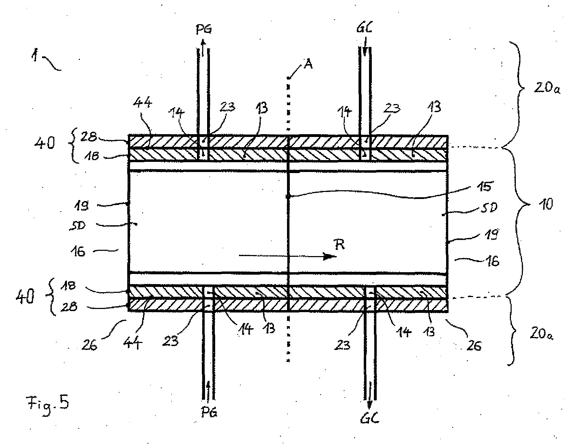

Figure 5 shows a schematic cross-section through a gas separation unit 1 according to the first embodiment of the invention, wherein the cross-section takes course through the rotational axis A. Figure 5 is to explain components groups and the arrangement of components of a gas separation unit 1. For the same details, the same reference numerals as in the preceding Figures are used.

The gas separation unit 1 comprises two stator sections 20a between which a rotor 10 is arranged. The rotor 10 can be rotated about the rotational axis A in a rotational direction R. The rotor 10 comprises a plurality of sectors 16 wherein two sectors 16 are shown in Figure 5. Each sector 16 comprises a separation device SD. Sector division walls 15 subdivide rotor 10 into the sectors 16. The sectors 16 are also limited by an outer wall 19 of the rotor 10. Each sector 16 comprises at each of its axial ends a flat rotor valve region 18, which each comprises one rotor open area of 14 for each sector 16. The rotor valve regions 18 each comprise rotor solid areas 13 which are located between the rotor open areas 14 which also are part of the rotor valve regions 18. The rotor valve regions 18 can be located on a rotor disc 12 as shown in Figures 1 and 2.

The stator sections 20a of the stator each comprise a flat stator valve region 28. The stator valve regions 28 can be located on a stator disc 24 as shown in Figures 1 to 3. The stator valve regions 28 each comprise one stator open area 23 for each sector 16. A station 26 is defined by one or both stator open areas 23 in one or both stator sections 20a which can be connected with one single sector 16 at the same time by a valve 40. At different stations 26, different gases, for example process gas PG and CO₂ which is to be separated, can be supplied to or discharged from the sectors 16 which are located at the stations 26.

One stator valve region 28 and one rotor valve region18 together form a set of valves 40. The number of valves 40 is the same as the number of sectors 16. The valve function is by overlapping the rotor open area 14 and the stator open area 23 which can be effected by rotating the rotor 10. Overlapping the stator open area 23 with a rotor solid area 13 closes the valve. The relative movement between the stator sections 20a and the rotor 10 takes place between the stator valve region 28 and the rotor valve region18 of each set of valves 40. The rotor open area 14 can be much wider as shown in figure 5 such that only at the sector division walls 15, the rotor solid areas 13 are present. This corresponds to the second embodiment.

Figure 6 shows a schematic perspective view through a second embodiment of the rotor 10. Same features and elements are associated with the same reference numerals as in Figures 2b, 2c, 4a, 4b, 4c, 4d and their descriptions which can be referred to in this respect. In Figure 6 the rotor solid areas 13 are formed by axial end surfaces of sector boundary walls 15 i.e. walls separating the sectors 16. The space between the end parts of the sector boundary wall 15 act as the rotor open area 14 at which gas can flow from or to a sector 16.

Figure 7 shows a schematic perspective view through a second embodiment of the outside of the stator disc 24, which is in contact with the rotor in the gas separation unit 1. Same features and elements are associated with the same reference numerals as in Figures 3, 4a, 4b, 4c, 4d and their descriptions which can be referred to in this respect. Said outside of the stator disc comprises diffusors 25 arranged in radial direction and having a rectangular shape. In some preferred embodiments sealings 30 are arranged between the rotor 10 and the stator discs 24, wherein the sealings comprise sealing openings 31 arranged in radial direction and are fixed to the stator disc 24 and wherein the patterns of the sealing openings match with the patterns of the diffusors 25 comprised in the stator discs 24. In some other preferred embodiments, the outside of the stator discs do not comprise diffusors 25 and sealings 30 are arranged between the rotor 10 and the stator discs 24, wherein the sealings 30 comprise sealing openings 31 arranged in radial direction and are fixed to the stator discs 24 and wherein the sealing openings 31 constitute the set of diffusors 25 as represented on Figure 7. The stator disc of Figure 7 is preferably combined with the rotor of Figure 6. The width in rotational direction of the rotor solid areas 13 of Figure 6 is greater than the width of the diffusors 25 of the stator of Figure 7 such that the valves can be closed completely. The use of the stator disc (or sealing) of Figure 7 in association with the rotor of Figure 6 has the advantageous effect that the dead zone which contributes to dilution of the gas to be separated is reduced as the location of valve action is arranged at the outer surface of the rotor. Therefore, the volume of the stator disc (or sealing) diffusor is not a part of the dead zone. The stator open areas 23 which allow gas flow from or to the rotor can be seen from the inside of the rectangular shaped diffusors 25.

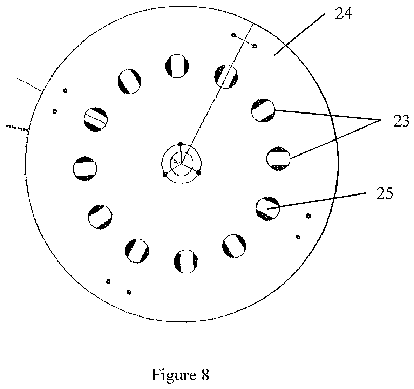

Figure 8 shows a schematic top view through a second embodiment of the stator open areas 23 of the stator disc 24. Same features and elements are associated with the same reference numerals as in Figures 3, 4a, 4b, 4c, 4d and their descriptions which can be referred to in this respect. In Figure 8 are represented in foreground the stator open areas 23 which allow gas flow from or to the rotor. Said stator open areas 23 are connected, to the diffusors 25 having a rectangular shape and arranged in radial direction, on one side and to flanges 21 on the other side for supplying and discharging gas to and from the rotor. The rectangular shape of the diffusors 25 can be seen from the inside of the stator open areas 23 on Figure 8.

The energy consumption of different CO₂ enrichments of low CO₂ content process gas was simulated digitally and calculated by the inventors. The table below contains the average energy consumptions of the TSA CO₂ concentration referred to in the present specification:

**Table 2: average energy consumption of TSA CO₂ concentration processes according to CO₂ enrichment (+80%, +30% or +10%).**

| Case (CO₂ concentration of the gases on vol% on dry basis) | Use Example | Energy consumption t Steam/ t CO₂ |
|---|---|---|
| GN flue gases or LCL | | |
| 10% → 90% | BIR CR | 1.30 t Steam/ t CO₂ |
| GN flue gases or LCL | | |
| 10% → 40% | GP-GBIR | 0.65 t Steam/ t CO₂ |
| Low CO₂ FCH | | |
| 30% → 40% | GP-GBIR | 0.30 t Steam/ t CO₂ |

Key to abbreviations:
- GN flue gases (low CO₂ content process gas): flue gas from the steam generator of the ammonia-soda process unit for producing sodium carbonate or from the unit for producing refined sodium bicarbonate.
- LCL (low CO₂ content process gas): exit gas from column scrubber (LCL) for precipitation of crude bicarbonate (BIB).
- GP-GBIR (CO₂ enriched gas): weak gas (as opposed to the "rich" gas below) (FCH gas) used in the intermediate part of the crude bicarb precipitation columns (cf. Ullmann's Encycl. Fig.7) or BIR gas (for the production of refined sodium bicarbonate).
- BIR CR (CO₂ enriched gas): gas used for the crystallization of refined sodium bicarbonate (BIR) in a crystallizer (CR).

Among the various alternatives according to the present invention, that relating to the use of a TSA (and/or CTSA) CO₂ concentration module is particularly preferred when it uses, according to items 14 to 18, the excess low-temperature heat energy from the production of carbonate or from the production of refined sodium bicarbonate. Thus the partial concentration of CO₂ is not accompanied by additional energy consumption or by additional generation of CO₂ on combustion of fossil energy such as natural gas, coal or petroleum.

Moreover, in all of the cases where enrichment processes referred to in the present specification are used, the partial enrichment in CO₂ of low CO₂ content process gases into gases with a CO₂ content of more than 40% concentration - for example at least 45%, or at least 50%, or at least 60%, or at least 70% of CO₂ by volume on a dry gas basis - makes it possible: to increase the particle size of the ammoniacal crude bicarbonate produced, or of the refined sodium bicarbonate, reducing the amount of residual water in the steps of filtering or suctioning the crystallized solids and permitting a net gain in energy, which is in synergy with the use of a TSA CO₂ concentration module, and so makes it possible to limit the overall energy consumption in the production of sodium carbonate by an ammonia process, or the production of a refined sodium bicarbonate with reduced CO₂ discharge.

The examples that follow are intended for illustrating further the invention. They should not be interpreted as limiting the scope of the invention claimed.

### Example 1

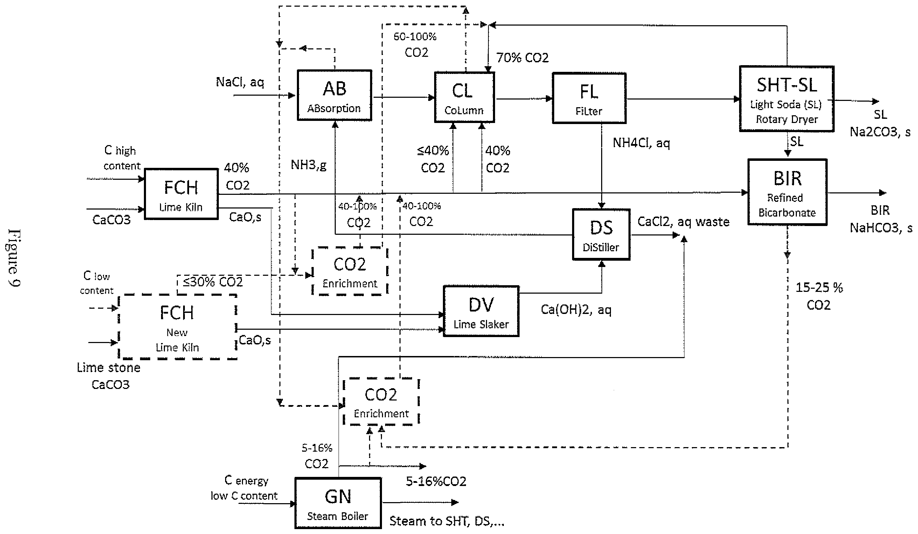

Figure 9 illustrates various modes of application of the present invention. The diagram elements in solid lines illustrate production of sodium carbonate by the ammonia-soda process or production of refined sodium bicarbonate.

The diagram elements in dashed lines (concentration modules and arrows in dashed lines) illustrate various modes of application of the present invention utilizing a limited-enrichment TSA CO₂ enrichment module, in particular according to item 14.

Key to abbreviations in Fig.9:
- AB: Ammonia absorber (production of ammoniacal brine)
- CL : Carbonation column for precipitation of ammoniacal sodium bicarbonate (crude sodium bicarbonate).
- FL: Filter for separating ammoniacal bicarbonate (crude bicarbonate) from the crystallization mother liquors (rich in dissolved NH₄Cl and NaCl), referred to as filter liquid.
- DS: Distiller for the crystallization mother liquors (for regeneration of ammonia), consuming lime and distillation steam and producing a distiller liquid rich in CaCl₂ in aqueous solution.
- DV: Quicklime dissolver for the production of milk of lime, used for the distillation of the filter liquid (crystallization mother liquors of the ammoniacal bicarbonate).
- SHT-SL: Light soda ash dryer (calcination of the ammoniacal bicarbonate to give light soda ash under the effect of heat, consuming steam).
- FCH: Lime kiln
- New lime kiln FCH: FCH operating with less carbon-rich fuel than coke (for example, partially hydrogenated organic material such as charcoal, anthracite, agricultural wastes, etc.).
- GN: Steam generator of the ammonia-soda process unit for producing sodium carbonate or of the unit for producing refined sodium bicarbonate.
- CO₂ enrichment: TSA module for enrichment of low CO₂ content process gas of TSA type, preferably of CTSA type.

### Example 2 (not in accordance to the invention)

Production of crude ammoniacal sodium bicarbonate as described in Ullmann's encyclopedia (see above) in section 1.4.1.2 & figure 7 is carried out. The amount of weak gas injected at 2.5 bar in the middle of the carbonation column is 510 Nm³ of CO₂ at 40 vol% on a dry gas basis, per ton of soda ash produced. The amount of rich gas ('strong gas') injected at 3.5 bar at the bottom of the column is 390 Nm³ of CO₂ at 70 vol% on a dry gas basis, per ton of soda ash produced. The temperature profile along the column (exothermic carbonation reaction) exhibits a temperature maximum of 58°C, and the slurry leaves the carbonation column at 30°C.

The moisture content of the ammoniacal crude bicarbonate produced, at the exit from the rotary filter, is approximately 18%.

### Example 3 (in accordance with the invention)

The same crude ammoniacal bicarbonate production process as described in the preceding example is made up with a lime-kiln weak-gas CO₂ enrichment module operating with a fuel having a lower carbon content. The lime kiln gas produced has a weak gas with 37% by volume of CO₂ concentration on a dry gas basis.

This weak gas is partially enriched by a TSA-type CO₂ concentration module operating over a temperature range between 38°C (adsorption) and 98°C (desorption), to produce a gas enriched to 85% of CO₂ by volume on a dry gas basis, which concentration is measured on a calibrated infra-red Siemens Ultramat 23 analyser. The concentration module uses hot condensates from the distillation section as heating fluid.

The same carbonation column is used as in Example 2, with a quantity of 37% weak gas ('weak gas') readjusted in CO₂ level to 40% with the gas enriched to 85%, and injected at 2.5 bar, in the middle of the carbonation column. The quantity of weak gas injected is unchanged at 510 Nm³ of CO₂ at 40 vol% on a dry gas basis, per ton of soda ash produced. The rich gas ('strong gas') at 70% CO₂ by volume on a dry gas basis is replaced by the rich gas enriched to 85 vol% CO₂ on a dry gas basis, injected at the same pressure of 3.5 bar, injected at the bottom of the column and in a 100% relative CO₂ quantity identical to that corresponding to the flow rate of rich gas in Example 2.

The temperature profile along the column (exothermic carbonation reaction) exhibits a temperature maximum of 61°C, and the slurry leaves the carbonation column at 30°C.

The moisture content of the ammoniacal crude bicarbonate produced at the column outlet is 14% water (average over 24 hours) at the exit of the rotary filter, requiring less steam in the light soda ash dryer (SHT-SL) and compensating the surplus of energy consumed by the TSA CO₂ concentration module.

The utilization yield of NaCl is increased from 73% (Example 2) to 76% (Example 3). The absorption yield (one pass) of CO₂ is equivalent to that in Example 2.

The carbonation column production rate is subsequently increased gradually. An increase of +15% in the column capacity produces the same crude ammoniacal bicarbonate moisture content as in Example 2.

This example shows the advantage of using partial CO₂ enrichment: the overall capture yield of low-content CO₂ (37%) is improved substantially. The capture of CO₂ at the carbonation column exit and its reconcentration to a concentration of 50% to 85% would therefore make it possible to loop this CO₂ and to increase significantly the overall fixation balance of CO₂ produced in the lime kiln section to more than 70%: between 80% to 95%, depending on the possible recovery of the low-temperature heat energy from the unit for producing sodium carbonate.

### Example 4 (in accordance with the invention)

A comparative test similar to Examples 2 and 3 is carried out in a refined sodium bicarbonate production unit similar to that described by Te Pang Hou, Manufacture of Soda, American Chemical Society Monograph Series, Ed. The Chemical Catalog Company, Inc. New York USA, 1933, Chapter XV-The manufacture of Refined Sodium Bicarbonate, pp. 196-197.

A lime kiln gas with 37 vol% of CO₂ on a dry gas basis is used for the carbonation of the refined sodium bicarbonate. A sample is taken at the outlet of the carbonator every hour and is analysed for its particle size, over 24 hours.

In a second phase, the same unit for producing refined sodium bicarbonate is fed with CO₂ gas from a mixture of bicarbonation column exit gas (at 20 vol% CO₂ on a dry basis) and of lime kiln gas (at 37 vol% CO₂ on a dry basis), this mixture being enriched with CO₂ by a TSA CO₂ concentration module, to a CO₂ concentration of 60 vol% CO₂ on a dry basis. The TSA concentration module is supplied with energy by the 2 bar steam from the expansion of steam at the outlet of the SHT-SL.

A series of samples are taken from the outlet at the carbonator each hour, in the same way as above, over a duration of 24 hours, and the samples are analysed for particle size.

The change in the weight-average diameter of the sodium bicarbonate crystals produced, and measured by passing them through 500, 400, 355, 315, 250, 200, 160, 125, 100, 63 and 45 µm screens, is significant: +12%. The steam consumption found for the refined sodium bicarbonate dryer is a drop of 7% over the test period, relative to the use of unenriched CO₂.

The average degree of capture of the CO₂ in the crystallized sodium bicarbonate goes from 70% to 88%.

## Claims

1. Process for producing sodium carbonate by an ammonia-soda process and/or for producing refined sodium bicarbonate, wherein:
- a low CO₂ content process gas (PG) generated by an ammonia-soda process unit and/or generated by a refined sodium bicarbonate unit,
- is enriched into a CO₂ enriched gas by using a TSA (Temperature Swing Adsorption) CO₂ concentration module (1),
and said CO₂-enriched gas has a CO₂ content increased by: at least +10% by volume on dry gas basis relative to the CO₂ concentration of the low content process gas, and
- the CO₂-enriched gas is subsequently recycled to the ammonia-soda process unit and/or to the refined sodium bicarbonate unit, in order:
• to produce at least one product selected from the following: sodium carbonate, ammoniacal sodium bicarbonate, and refined sodium bicarbonate,
• or to carbonate at least part of effluent from the ammonia-soda process unit and/or generated by the refined sodium bicarbonate unit,
and wherein the TSA CO₂ concentration module is a gas separation unit (1) for separation of CO₂ from the process gas (PG), wherein:
- the gas separation unit (1) comprises a stator (20) and
- a rotor (10) which is connected to the stator (20) and is rotatable relatively to the stator (20) about a rotational axis (A),
- the rotor (10) comprising a plurality of sectors (16),
- each sector (16) containing a separation device (SD) arranged to separate at least part of the CO₂ from the process gas (PG) which is led into the separation device (SD),
wherein each sector (16) is fluidically connected with at least one valve (40),
- the valve (40) is a rotary active valve (40), the rotary active valve (40) comprising a stator open area (23) which is located in a stator valve region (28) of the stator (20),
- the rotor (10) comprises a rotor valve region (18) having a
- rotor solid area (13) which is overlappable with the stator open area (23) in order to close the valve (40), and a rotor open area (14) which is overlappable with the stator open area (23) in order to open the valve (40),
- wherein an extent of overlapping of the stator open area (23), the rotor solid area (13) and the rotor open area (14) is changeable by a rotation (R) of the rotor (10) relative to the stator (20), and
at least part of the CO₂ separated in the separation device (SD) is led out the separation device (SD) by heating so that to produce the CO₂ enriched gas;
and wherein:
- the heating of the separation device (SD) is at least made with steam at a pressure of less than 10 bar relative to atmospheric pressure, generated by an apparatus of the ammonia-soda process unit and/or of the refined sodium bicarbonate unit, and the steam with a pressure of less than 10 bar relative to atmospheric pressure is a high pressure steam which has been expanded after giving-up part of its heat energy in at least one apparatus of the ammonia-soda process unit for producing sodium carbonate by the ammonia-soda process or of the refined sodium bicarbonate unit for producing refined sodium bicarbonate; and/or
- the heating of the separation device (SD) is at least made with, or complemented with, the heating energy of a condensate or a liquid effluent having a temperature of at least 35°C and at most 110°C, generated by at least one apparatus of the ammonia-soda process unit or of the refined sodium bicarbonate unit.

2. Process according to Claim 1 wherein the CO₂-enriched gas has an increased CO₂ concentration of at most +90, preferably of at most +80, more preferably of at most +60 % by volume on a dry gas basis relative to the CO₂ concentration of the low CO₂ content process gas.

3. Process according to Claims 1 or 2 wherein the CO₂-enriched gas has a CO₂ concentration of at most 95% by volume on a dry gas basis.

4. Process according to Claim 3, wherein the CO₂-enriched gas has a CO₂ concentration of at most 90% by volume on a dry gas basis.

5. Process according to Claim 4, wherein the CO₂-enriched gas has a CO₂ concentration of at most 80% by volume on a dry gas basis.

6. Process according to Claim 5, wherein the CO₂-enriched gas has a CO₂ concentration of at most 70% by volume on a dry gas basis.

7. Process according to Claim 6, wherein the CO₂-enriched gas has a CO₂ concentration of at most 60% by volume on a dry gas basis.

8. Process according to Claim 7, wherein the CO₂-enriched gas has a CO₂ concentration of at most 45%, of CO2, expressed by volume on a dry gas basis.

9. Process according to any one of the preceding claims, wherein the heating of the separation device (SD) is at least made with steam at a pressure of less than 10 bar relative to atmospheric pressure, said steam being generated by an apparatus of the ammonia-soda process unit and/or of the refined sodium bicarbonate unit, and the steam with a pressure of less than 10 bar relative to atmospheric pressure is a high pressure steam which has been expanded after giving up part of its heat energy in at least one apparatus of the ammonia-soda process unit for producing sodium carbonate by the ammonia-soda process or of the refined sodium bicarbonate unit for producing refined sodium bicarbonate, selected among: a light soda ash dryer, a dense soda ash dryer, an ammonia distiller, an electricity-generating steam turbine.

10. Process according to any one of the preceding claims, wherein the TSA CO₂ concentration module uses energy for the CO₂ concentration of the low CO₂ content process gas, wherein at least part of the energy is steam at a pressure of less than 10 bars relative to atmospheric pressure which is a vapor or steam originating from the mechanical recompression of a steam or via an ejector of a steam or of a vapor from at least one apparatus in the ammonia-soda process unit for producing sodium carbonate and/or in the unit for producing refined sodium bicarbonate, such as: the vapor from a quicklime hydrator or slaker, the vapor from a dissolver of quicklime to milk of lime, the vapor from a sodium carbonate monohydrate evaporator-crystallizer, the vapor from a light soda ash dryer, the vapor from a dense soda ash dryer, the vapor of any hot effluent.

11. Process according to any one of the preceding claims, wherein the process gas (PG) is a carbon-fuel steam generator flue gas, advantageously having a CO₂ concentration between 5 and 16 vol. % on a dry gas basis, and wherein the carbon fuel is selected from the following: coal, natural gas, lignite, hydrocarbon, fuel oil, biomass, carbon-containing household waste, carbon-containing agricultural waste, water treatment station residue, carbon-containing industrial residue, and mixtures thereof.

12. Process according to any one of Claims 1 to 10, wherein the process gas (PG) is from an ammoniacal bicarbonate precipitation column or from a scrubber of such a column, having advantageously a CO₂ concentration of between 5 and 16 vol% on a dry gas basis.

13. Process according to any one of Claims 1 to 10, wherein the process gas (PG) is generated by a refined sodium bicarbonate precipitation column or from a horizontal lime kiln, having advantageously a CO₂ concentration of between 15 and 30 vol% on a dry gas basis.

14. Process according to any one of Claims 1 to 10, wherein the process gas (PG) is from a lime kiln, advantageously a vertical kiln, advantageously a parallel flow regenerative lime shaft kilns, more advantageously a vertical mixed feed shaft kiln, and preferably has a CO₂ concentration of between 30 and 45 vol% on a dry gas basis.

15. Process according to any one of Claims 1 to 14, wherein the CO₂-enriched gas is subsequently used in a unit for producing refined sodium bicarbonate.

## Patentansprüche

1. Verfahren zur Herstellung von Natriumcarbonat durch ein Ammoniak-Soda-Verfahren und/oder zur Herstellung von raffiniertem Natriumbicarbonat, wobei:
- ein Prozessgas (PG) mit niedrigem CO₂-Gehalt, das durch eine Ammoniak-Soda-Verfahrensanlage erzeugt wird und/oder durch eine raffiniertes-Natriumbicarbonat-Anlage erzeugt wird,
- unter Verwendung eines TSA(Temperaturwechseladsorption)-CO₂-Konzentrationsmoduls (1) zu einem CO₂-angereicherten Gas angereichert wird,
und das CO₂-angereicherte Gas einen CO₂-Gehalt aufweist, der um wenigstens +10 Vol.-%, bezogen auf trockenes Gas, im Vergleich zu der CO₂-Konzentration des Prozessgases mit niedrigem Gehalt erhöht ist, und
- das CO₂-angereicherte Gas anschließend zu der Ammoniak-Soda-Verfahrensanlage und/oder zu der raffiniertes-Natriumbicarbonat-Anlage zurückgeführt wird, um:
• wenigstens ein Produkt ausgewählt aus den folgenden herzustellen: Natriumcarbonat, ammoniakalisches Natriumbicarbonat und raffiniertes Natriumbicarbonat,
• oder um wenigstens einen Teil des Abflusses der Ammoniak-Soda-Verfahrensanlage und/oder von der raffiniertes-Natriumbicarbonat-Anlage erzeugtes Material zu karbonisieren,
und wobei das TSA-CO₂-Konzentrationsmodul eine Gastrenneinheit (1) zum Abtrennen von CO₂ aus dem Prozessgas (PG) ist, wobei:
- die Gastrenneinheit (1) einen Stator (20) und
- einen Rotor (10), der mit dem Stator (20) verbunden ist und um eine Drehachse (A) relativ zu dem Stator (20) drehbar ist, umfasst,
- der Rotor (10) eine Vielzahl von Sektoren (16) umfasst,
- jeder Sektor (16) eine Trennvorrichtung (SD) umfasst, die dafür gestaltet ist, wenigstens einen Teil des CO₂ aus dem Prozessgas (PG), das in die Trennvorrichtung (SD) geleitet wird, abzutrennen,
wobei jeder Sektor (16) mit wenigstens einem Ventil (40) in Fluidverbindung steht,
- das Ventil (40) ein aktives Drehventil (40) ist, wobei das aktive Drehventil (40) eine Stator-offene-Fläche (23) umfasst, die in einem Stator-Ventilbereich (28) des Stators (20) angeordnet ist,
- der Rotor (10) einen Rotor-Ventilbereich (18) umfasst, der aufweist:
- eine Rotor-feste-Fläche (13), die mit der Stator-offene-Fläche (23) überlappbar ist, um das Ventil (40) zu schließen, und eine Rotor-offene-Fläche (14), die mit der Stator-offene-Fläche (23) überlappbar ist, um das Ventil (40) zu öffnen,
- wobei das Ausmaß an Überlappung der Stator-offene-Fläche (23), der Rotor-feste-Fläche (13) und der Rotor-offene-Fläche (14) durch Drehung (R) des Rotors (10) relativ zu dem Stator (20) veränderbar ist und
wenigstens ein Teil des in der Trennvorrichtung (SD) abgetrennten CO₂ durch Erhitzen aus der Trennvorrichtung (SD) abgeführt wird, um das CO₂-angereicherte Gas zu erzeugen;
und wobei:
- das Heizen der Trennvorrichtung (SD) wenigstens mit Dampf mit einem Druck von weniger als 10 bar relativ zu Atmosphärendruck durchgeführt wird, der von einer Vorrichtung der Ammoniak-Soda-Prozessanlage und/oder der raffiniertes-Natriumbicarbonat-Anlage erzeugt wird, und der Dampf mit einem Druck von weniger als 10 bar relativ zu Atmosphärendruck ein Hochdruckdampf ist, der expandiert worden ist, nachdem er einen Teil seiner Wärmeenergie in wenigstens einer Vorrichtung der Ammoniak-Soda-Prozessanlage zur Herstellung von Natriumcarbonat durch das Ammoniak-Soda-Verfahren oder der raffiniertes-Natriumbicarbonat-Anlage zur Herstellung von raffiniertem Natriumbicarbonat abgegeben hat; und/oder
- das Heizen der Trennvorrichtung (SD) wenigstens mit oder ergänzt mit der Wärmeenergie eines Kondensats oder eines flüssigen Abflusses mit einer Temperatur von wenigstens 35°C und höchstens 110°C durchgeführt wird, der von wenigstens einer Vorrichtung der Ammoniak-Soda-Prozessanlage und/oder der raffiniertes-Natriumbicarbonat-Anlage erzeugt wird.

2. Verfahren gemäß Anspruch 1, wobei das CO₂-angereicherte Gas eine erhöhte CO₂-Konzentration von höchstens +90, vorzugsweise höchstens +80, bevorzugter höchstens +60 Vol.-%, bezogen auf trockenes Gas, im Vergleich zu der CO₂-Konzentration des Prozessgases mit niedrigem CO₂-Gehalt aufweist.

3. Verfahren gemäß Ansprüchen 1 oder 2, wobei das CO₂-angereicherte Gas eine CO₂-Konzentration von höchstens 95 Vol.-%, bezogen auf trockenes Gas, aufweist.

4. Verfahren gemäß Anspruch 3, wobei das CO₂-angereicherte Gas eine CO₂-Konzentration von höchstens 90 Vol.-%, bezogen auf trockenes Gas, aufweist.

5. Verfahren gemäß Anspruch 4, wobei das CO₂-angereicherte Gas eine CO₂-Konzentration von höchstens 80 Vol.-%, bezogen auf trockenes Gas, aufweist.

6. Verfahren gemäß Anspruch 5, wobei das CO₂-angereicherte Gas eine CO₂-Konzentration von höchstens 70 Vol.-%, bezogen auf trockenes Gas, aufweist.

7. Verfahren gemäß Anspruch 6, wobei das CO₂-angereicherte Gas eine CO₂-Konzentration von höchstens 60 Vol.-%, bezogen auf trockenes Gas, aufweist.

8. Verfahren gemäß Anspruch 7, wobei das CO₂-angereicherte Gas eine CO₂-Konzentration von höchstens 45 % CO₂, ausgedrückt durch das Volumen bezogen auf trockenes Gas, aufweist.

9. Verfahren gemäß einem der vorstehenden Ansprüche, wobei das Heizen der Trennvorrichtung (SD) wenigstens mit Dampf mit einem Druck von weniger als 10 bar relativ zu Atmosphärendruck durchgeführt wird, wobei der Dampf von einer Vorrichtung der Ammoniak-Soda-Prozessanlage und/oder der raffiniertes-Natriumbicarbonat-Anlage erzeugt wird, und der Dampf mit einem Druck von weniger als 10 bar relativ zu Atmosphärendruck ein Hochdruckdampf ist, der expandiert worden ist, nachdem er einen Teil seiner Wärmeenergie in wenigstens einer Vorrichtung der Ammoniak-Soda-Prozessanlage zur Herstellung von Natriumcarbonat durch das Ammoniak-Soda-Verfahren oder der raffiniertes-Natriumbicarbonat-Anlage zur Herstellung von raffiniertem Natriumbicarbonat, ausgewählt aus: einem leichte-Sodaasche-Trockner, einem dichte-Sodaasche-Trockner, einer Ammoniakdestillationsvorrichtung, einer Elektrizitätserzeugungs-Dampfturbine, abgegeben hat.

10. Verfahren gemäß einem der vorstehenden Ansprüche, wobei das TSA-CO₂-Konzentrationsmodul Energie für die CO₂-Konzentration des Prozessgases mit niedrigem CO₂-Gehalt verwendet, wobei wenigstens ein Teil der Energie Dampf mit einem Druck von weniger als 10 bar relativ zu Atmosphärendruck ist, der Wasserdampf oder Dampf ist, der aus der mechanischen Rekompression von Dampf oder über einen Ejektor aus einem Dampf oder aus einem Wasserdampf aus wenigstens einer Vorrichtung der Ammoniak-Soda-Prozessanlage zur Herstellung von Natriumcarbonat und/oder der Anlage zur Herstellung von raffiniertem Natriumbicarbonat stammt, wie z. B.: der Dampf aus einem Löschkalk-Hydrator oder Löscher, dem Dampf aus einer Auflösungsvorrichtung von Löschkalk zu Kalkmilch, der Dampf aus einem Natriumcarbonatmonohydrat-Verdampfer-Kristallisator, der Dampf aus einem leichte-Sodaasche-Trockner, der Dampf aus einem dichte-Sodaasche-Trockner, der Dampf aus einem heißen Abfluss.

11. Verfahren gemäß einem der vorstehenden Ansprüche, wobei das Prozessgas (PG) ein Kohlenstoffbrennstoff-Dampfgenerator-Rauchgas ist, vorzugsweise mit einer CO₂-Konzentration von zwischen 5 und 16 Vol.-%, bezogen auf trockenes Gas, und wobei der Kohlenstoffbrennstoff ausgewählt ist aus den folgenden: Kohle, Erdgas, Braunkohle, Kohlenwasserstoff, Heizöl, Biomasse, kohlenstoffhaltiger Hausmüll, kohlenstoffhaltiger landwirtschaftlicher Abfall, Wasseraufbereitungsanlagenrückstand, kohlenstoffhaltiger Industrieabfall und Gemischen davon.

12. Verfahren gemäß einem der Ansprüche 1 bis 10, wobei das Prozessgas (PG) aus einer ammoniakalischen Bicarbonat-Präzipitationssäule oder aus einem Wäscher einer derartigen Säule stammt und vorteilhaft eine CO₂-Konzentration von zwischen 5 und 16 Vol.-%, bezogen auf trockenes Gas, aufweist.

13. Verfahren gemäß einem der Ansprüche 1 bis 10, wobei das Prozessgas (PG) von einer raffiniertes-Natriumbicarbonat-Präzipitationssäule oder einem horizontalen Kalkofen erzeugt wird und vorteilhaft eine CO₂-Konzentration von zwischen 15 und 30 Vol.-%, bezogen auf trockenes Gas, aufweist.

14. Verfahren gemäß einem der Ansprüche 1 bis 10, wobei das Prozessgas (PG) aus einem Kalkofen stammt, vorteilhaft einem vertikalen Ofen, vorteilhaft einem Parallelstrom-Kalk-Regenerativschachtofen, vorteilhafter einem Schachtofen mit gemischter senkrechter Zufuhr, und vorzugsweise eine CO₂-Konzentration von zwischen 30 und 45 Vol.-%, bezogen auf trockenes Gas, aufweist.

15. Verfahren gemäß einem der Ansprüche 1 bis 14, wobei das CO₂-angereicherte Gas anschließend in einer Einheit zur Herstellung von raffiniertem Natriumbicarbonat verwendet wird.

## Revendications

1. Procédé de production de carbonate de sodium par un procédé de soude à l'ammoniac et/ou de production de bicarbonate de sodium raffiné, dans lequel :
- un gaz de procédé (PG) à faible teneur en CO₂ est généré par une unité de production de soude à l'ammoniac et/ou généré par une unité de bicarbonate de sodium raffiné,
- est enrichi en un gaz enrichi en CO₂ au moyen d'un module de concentration de CO₂ TSA (adsorption modulée en température) (1),
et ledit gaz enrichi en CO₂ a une teneur en CO₂ augmentée de : au moins +10 % en volume exprimée sur gaz sec par rapport à la concentration de CO₂ du gaz de procédé à faible teneur, et
- le gaz enrichi en CO₂ est ensuite recyclé vers l'unité de production de soude à l'ammoniac et/ou vers l'unité de bicarbonate de sodium raffiné, afin:
• de produire au moins un produit choisi parmi les suivants : carbonate de sodium, bicarbonate de sodium ammoniacal et bicarbonate de sodium raffiné,
• ou de carbonater au moins une partie d'un effluent de l'unité de production de soude à l'ammoniac et/ou généré par l'unité de bicarbonate de sodium raffiné,
et dans lequel le module de concentration de CO₂ TSA est une unité de séparation de gaz (1) pour la séparation de CO₂ du gaz du procédé (PG), dans lequel :
- l'unité de séparation de gaz (1) comprend un stator (20) et
- un rotor (10) qui est raccordé au stator (20) et peut tourner par rapport au stator (20) autour d'un axe de rotation (A),
- le rotor (10) comprenant une pluralité de secteurs (16),
- chaque secteur (16) contenant un dispositif de séparation (SD) agencé pour séparer au moins une partie du CO₂ du gaz de procédé (PG) qui est introduit dans le dispositif de séparation (SD),
dans lequel chaque secteur (16) est fluidiquement raccordé à au moins une vanne (40),
- la vanne (40) est une vanne active rotative (40), la vanne active rotative (40) comprenant une zone ouverte de stator (23) qui est située dans une région de vanne de stator (28) du stator (20),
- le rotor (10) comprend une région de vanne de rotor (18) comportant
- une zone pleine de rotor (13) qui peut se chevaucher avec la zone ouverte de stator (23) afin de fermer la vanne (40), et une zone ouverte de rotor (14) qui peut se chevaucher avec la zone ouverte de stator (23) afin d'ouvrir la vanne (40),
- dans lequel un degré de chevauchement de la zone ouverte de stator (23), de la zone pleine de rotor (13) et de la zone ouverte de rotor (14) est modifiable par une rotation (R) du rotor (10) par rapport au stator (20), et
au moins une partie du CO₂ séparé dans le dispositif de séparation (SD) est évacué hors du dispositif de séparation (SD) par chauffage de façon à produire le gaz enrichi en CO₂ ;
et dans lequel :
- le chauffage du dispositif de séparation (SD) est au moins effectué avec de la vapeur d'eau à une pression inférieure à 10 bar par rapport à la pression atmosphérique, générée par un appareil de l'unité de production de soude à l'ammoniac et/ou de l'unité de bicarbonate de sodium raffiné, et la vapeur d'eau avec une pression inférieure à 10 bar par rapport à la pression atmosphérique est une vapeur d'eau à haute pression qui a été détendue après avoir évacué une partie de son énergie thermique dans au moins un appareil de l'unité de production de soude à l'ammoniac pour produire du carbonate de sodium par le procédé de production de soude à l'ammoniac ou de l'unité de bicarbonate de sodium raffiné pour produire du bicarbonate de sodium raffiné ; et/ou
- le chauffage du dispositif de séparation (SD) est effectué au moins avec, ou complété par, l'énergie de chauffage d'un condensat ou d'un effluent liquide ayant une température d'au moins 35 °C et d'au plus 110 °C, généré par au moins un appareil de l'unité de production de soude à l'ammoniac ou de l'unité de bicarbonate de sodium raffiné.

2. Procédé selon la revendication 1 dans lequel le gaz enrichi en CO₂ a une concentration de CO₂ accrue d'au plus +90, de préférence d'au plus +80, plus préférablement d'au plus +60 % en volume exprimée sur gaz sec par rapport à la concentration de CO₂ du gaz de procédé à faible teneur en CO₂.

3. Procédé selon les revendications 1 ou 2 dans lequel le gaz enrichi en CO₂ a une concentration de CO₂ d'au plus 95 % en volume exprimée sur gaz sec.

4. Procédé selon la revendication 3, dans lequel le gaz enrichi en CO₂ a une concentration de CO₂ d'au plus 90 % en volume exprimée sur gaz sec.

5. Procédé selon la revendication 4, dans lequel le gaz enrichi en CO₂ a une concentration de CO₂ d'au plus 80 % en volume exprimée sur gaz sec.

6. Procédé selon la revendication 5, dans lequel le gaz enrichi en CO₂ a une concentration de CO₂ d'au plus 70 % en volume exprimée sur gaz sec.

7. Procédé selon la revendication 6, dans lequel le gaz enrichi en CO₂ a une concentration de CO₂ d'au plus 60 % en volume exprimée sur gaz sec.

8. Procédé selon la revendication 7, dans lequel le gaz enrichi en CO₂ a une concentration de CO₂ d'au plus 45 %, de CO₂, exprimée en volume exprimée sur gaz sec.

9. Procédé selon l'une quelconque des revendications précédentes, dans lequel le chauffage du dispositif de séparation (SD) est au moins effectué avec de la vapeur d'eau à une pression inférieure à 10 bar par rapport à la pression atmosphérique, ladite vapeur d'eau étant générée par un appareil de l'unité de production de soude à l'ammoniac et/ou de l'unité de bicarbonate de sodium raffiné, et la vapeur d'eau avec une pression inférieure à 10 bar par rapport à la pression atmosphérique est une vapeur d'eau à haute pression qui a été détendue après avoir évacué une partie de son énergie thermique dans au moins un appareil de l'unité de production de soude à l'ammoniac pour produire du carbonate de sodium ou de l'unité de bicarbonate de sodium raffiné pour produire du bicarbonate de sodium raffiné, choisi parmi : un séchoir de carbonate de sodium léger, un séchoir de carbonate de sodium dense, un distillateur d'ammoniac, une turbine à vapeur de génération d'électricité.

10. Procédé selon l'une quelconque des revendications précédentes, dans lequel le module de concentration de CO₂ TSA utilise de l'énergie pour la concentration de CO₂ du gaz de traitement à faible teneur en CO₂, dans lequel au moins une partie de l'énergie est de la vapeur d'eau à une pression inférieure à 10 bar par rapport à la pression atmosphérique qui est une vapeur ou une vapeur d'eau provenant de la recompression mécanique d'un flux ou par l'intermédiaire d'un éjecteur d'une vapeur d'eau ou d'une vapeur provenant d'au moins un appareil dans l'unité de production de soude à l'ammoniac pour produire du carbonate de sodium et/ou dans l'unité de production de bicarbonate de sodium raffiné, telle que : la vapeur provenant d'un hydrateur ou d'un extincteur de chaux vive, la vapeur provenant d'un dissolveur de chaux vive pour produire du lait de chaux, la vapeur provenant d'un évaporateur-cristalliseur de carbonate de sodium monohydraté, la vapeur provenant d'un séchoir de carbonate de sodium léger, la vapeur provenant d'un séchoir de carbonate de sodium dense, la vapeur d'un effluent chaud quelconque.

11. Procédé selon l'une quelconque des revendications précédentes, dans lequel le gaz de procédé (PG) est un gaz de combustion de générateur de vapeur de combustible de carbone, ayant avantageusement une concentration de CO₂ comprise entre 5 et 16 % en volume exprimée sur gaz sec, et dans lequel le combustible de carbone est choisi parmi les suivants : charbon, gaz naturel, lignite, hydrocarbure, mazout, biomasse, déchets domestiques contenant du carbone, déchets agricoles contenant du carbone, résidu de station de traitement des eaux, résidu industriel contenant du carbone, et des mélanges de ceux-ci.

12. Procédé selon l'une quelconque des revendications 1 à 10, dans lequel le gaz de procédé (PG) provient d'une colonne de précipitation de bicarbonate ammoniacal ou d'un épurateur d'une telle colonne, ayant avantageusement une concentration de CO₂ comprise entre 5 et 16 % en volume exprimée sur gaz sec.

13. Procédé selon l'une quelconque des revendications 1 à 10, dans lequel le gaz de procédé (PG) est généré par une colonne de précipitation de bicarbonate de sodium raffiné ou à partir d'un four à chaux horizontal, ayant avantageusement une concentration de CO₂ comprise entre 15 et 30 % en volume exprimée sur gaz sec.

14. Procédé selon l'une quelconque des revendications 1 à 10, dans lequel le gaz de procédé (PG) provient d'un four à chaux, avantageusement un four vertical, avantageusement un four à chaux à cuve à flux parallèle régénératif, plus avantageusement un four à cuve à alimentation mixte vertical et, de préférence, a une concentration de CO₂ comprise entre 30 et 45 % en volume exprimée sur gaz sec.

15. Procédé selon l'une quelconque des revendications 1 à 14, dans lequel le gaz enrichi en CO₂ est ensuite utilisé dans une unité de production de bicarbonate de sodium raffiné.
